# EUROPÄISCHE PATENTSCHRIFT

(11) **EP 0 964 764 B1**
(45) Veröffentlichungstag und Bekanntmachung des Hinweises auf die Patenterteilung: **06.02.2002**
(21) Anmeldenummer: 98916830.7
(22) Anmeldetag: 03.03.1998
(51) Int. Cl.: B23D 77/00

(54) **REIB- UND SENK-SCHNEIDWERKZEUG**
FRICTION AND VERTICAL CUTTING TOOL
OUTIL DE COUPE POUR ALESAGE ET CHANFREINAGE

(30) Priorität: 03.03.1997 DE 19708601; 12.05.1997 DE 19719893
(43) Veröffentlichungstag der Anmeldung: 22.12.1999
(73) Patentinhaber: HARTMETALLWERKZEUGFABRIK ANDREAS MAIER GMBH, 88477 Schwendi (DE)
(72) Erfinder: MAIER, Andreas, D-88477 Schwendi-Hörenhausen (DE); EBLE, Wilfried, D-77948 Friesenheim (DE)
(74) Vertreter: König, Beate, Dipl.-Phys. Dr.
(86) Internationale Anmeldenummer: DE9800616
(87) Internationale Veröffentlichungsnummer: WO9839127

(56) Entgegenhaltungen:
- CH-A- 449 390
- DE-A- 3 007 322
- DE-C- 127 387
- DE-C- 3 232 804
- FR-A- 2 330 488
- FR-A- 2 615 769
- GB-A- 2 075 383
- US-A- 1 368 459
- D. KRESS: "Polykristalliner Diamant zum Feinbearbeiten von Bohrungen in Aluminium" WERKSTATT UND BETRIEB., Bd. 118, Nr. 5, Mai 1981, Seiten 253-256, XP002074937 MUNCHEN DE
- G. STRIEGL: "Reiben mit Einschneiden-Werkzeug" WERKSTATT UND BETRIEB., Bd. 114, Nr. 8, August 1981, Seiten 543-544, XP002074938 MUNCHEN DE

## Beschreibung

Die Erfindung betrifft ein Reib- und Senk-Schneidwerkzeug mit einem Grundkörper, an dem ein Schneidmesser durch ein Spannglied auswechselbar klemmbefestigt ist und durch ein Verstellglied über ein Verstellmittel in seiner radialen Position einstellbar ist.

Ein solches Werkzeug ist aus der DE 32 32 804 C2 bekannt. Für die Klemmbefestigung des Schneidmessers ist ein Spannkeil vorgesehen, der durch eine Differentialschraube (Doppelgewindebolzen) zum Klemmen des Schneidmesserträgers gespannt wird. Eine Verstellschraube mit einem keilförmigen Vorsatzstück ist vorgesehen, um den Schneidmesserträger zu verschwenken, wodurch eine radiale Einstellung des Schneidmessers erfolgt. Diese Feinverstellung des Schneidmessers ist verhältnismäßig arbeitsaufwendig, denn für eine Korrektur einer zu weiten Verstellung der Verstellschraube ist es erforderlich, die Anordnung zu lösen und erneut die Schraubverstellung vorzunehmen. Dies wird so lange wiederholt, bis der gewünschte Schneiddurchmesser des Werkzeugs eingestellt ist.

Aus der EP 0 544 658 B1 ist ein weiteres Werkzeug dieser Art bekannt, bei dem eine Schneidleiste auf einem leistenförmigen Träger (Kassette) angeordnet ist. Dieser Träger bzw. Kassette weist halbzylindrische Aussparungen auf, die jeweils zusammen zylindrische Taschen für eine Bohrstange bilden. Zum Justieren und Festklemmen der Kassette sind zwei Verstellschrauben vorgesehen, während zur axialen Verstellung der Kassette eine Verstellschraube vorgesehen ist, die über eine Kugel gegen die Kassette drückt. Eine Fixierung der Kassette erfolgt über die Verstellschrauben. Auch hier besteht das Problem, daß die Schneiddurchmessereinstellung infolge wiederholter Lösevorgänge aufwendig ist. Weiter ist infolge der Anlage der Kassette an der zugehörigen Längswand eine Verjüngungseinstellung der Schneide zur Gewährleistung der Schneidfunktion nicht möglich.

Die FR 2 615 769 A beschreibt eine Einstellvorrichtung für ein Schneidwerkzeug, bei der eine in einer Bohrung aufgenommene, gerundet ausgebildete Kassette das Schneidmesser trägt und durch eine Schraube mit zwei Gewinden unterschiedlicher Charakteristik verstellbar ist. Zur Ermöglichung einer Querverschiebung der Kassette ist ein Nut/Rippeneingriff mit der Schraube vorgesehen. Eine Verjüngungseinstellung des Schneidmessers ist bei dieser Konstruktion nicht möglich.

Bei einem Werkzeughalter für Werkzeuge der spanabhebenden Bearbeitung gemäß DE 30 07 322 A umfaßt das Schneidwerkzeug ein Schneidmesser, das durch ein Spannglied auswechselbar klemmbefestigt und durch ein Verstellglied über einen als Verstellmittel dienenden Schneidmesserträger in der radialen Position einstellbar ist. Zur Schneiddurchmesswereinstellung sind wiederholte Lösevorgänge erforderlich. Ein weiteres Verstellglied zur axialen Verstellung des Schneidmesserträgers steht mit seinem Kopf in einer komplementären Ausnehmung desselben in Formzwangseingriff derart, daß der Schneidmesserträger durch das letztere Verstellglied in der axialen Richtung zurückgezogen bzw. alternativ vorgezogen wird.

Aus der CH-PS 449 390 ist eine Reibahle mit Kühlmittelzufuhr bekannt, deren Werkzeugkörper mit einer zum Schneidkopf führenden zentralen Längsbohrung versehen ist, von der mehrere, zwischen den Messern austretende Querbohrungen schräg nach außen verlaufen. Durch diese Bohrungen wird Kühl- und Schmiermittel zugeführt, um den Schneidkopf während des Schneidvorgangs zu kühlen bzw. zu schmieren.

Bei einer in der DE 32 34 238 A beschriebenen Reibahle mit nachstellbarem Schneidkopf ist eine zentrale Kühlmittelbohrung vorgesehen, die sich in zwei divergierende, in flachem Winkel am Schaft der Konusschraube vorbeigeführte Verteilungsbohrungen verzweigt.

Gemäß EP 0 215 144 B ist eine Reibahle mit durch eine Konusschraube aufweitbarem Schneidkopf mit einem axial durch den Reibahlenschaft geführten Kühlmittelkanal versehen, der in eine den Gewindeschaft der Konusschraube aufnehmende Gewindebohrung und anschließend an diese in einen hohlzylindrischen, durch die Konusschraube aufweitbaren Teil des Reibahlenschaftes mit dem Schneidkopf übergeht. Zwischen dem hohlzylindrischen Schaftteil und der Konusschraube ist ein Ringkanal eingeschlossen, der über einen achsparallelen Kühlmittelkanal in der Konusschraube mit dem axialen Kühlmittelkanal verbunden ist. Von dem Ringkanal führt mindestens ein Kanal zwischen die Schneiden, wobei dieser Kanal in einem Winkel zwischen 30 und 45° nach vorne gerichtet sein kann.

Ferner sind Automatenreibahlen bekannt geworden, bei denen das Kühlmittel durch den Schaft direkt an die Schneide geführt wird.

Der Erfindung liegt die Aufgabe zugrunde, ein Reib- und Senk-Schneidwerkzeug zu schaffen, das ein in seiner radialen Position einwärts und auswärts stufenlos einstellbares Schneidmesser mit einstellbarer Verjüngung aufweist. Das Schneidwerkzeug soll auch zweckmäßig mit einer Kühl- und/oder Schmiermittelzufuhr zum Schneidenbereich versehen sein.

Diese Aufgabe ist erfindungsgemäß bei einem Reib- und Senk-Schneidwerkzeug mit den Merkmalen des Anspruchs 1 bzw. 2 gelöst. Vorteilhafte Weiterbildungen des erfindungsgemäßen Reib- und Senk-Schneidwerkzeugs sind Gegenstand der abhängigen Ansprüche.

Ein erfindungsgemäßes Reib- und Senk-Schneidwerkzeug umfaßt somit einen Grundkörper, an dem ein Schneidmesser durch ein Spannglied auswechselbar klemmbefestigt ist und durch ein Verstellglied über ein Verstellmittel in seiner radialen Position einstellbar ist. Gemäß einer ersten Variante ist das Verstellmittel ein sich in einer Ausnehmung des Grundkörpers erstreckender Schneidmesserträger und das Verstellglied umfaßt zwei Differentialschrauben, die mit dem Verstellmittel in Gewindeeingriff stehen. Gemäß einer zweiten Variante ist das Verstellmittel ein sich in einer Ausnehmung des Grundkörpers erstreckender Schneidmesserträger und das Verstellglied umfaßt zwei Kugel- oder Klemmglieder, die mit einer komplementären Ausnehmung des Verstellmittels in Formzwangseingriff stehen derart, daß eine Bewegung des Verstellglieds eine Bewegung des Schneidmessers in derselben Richtung herbeiführt.

Durch die erfindungsgemäße Ausgestaltung des Verstellglieds ergibt sich vorteilhaft eine stufenlose Bewegung des Schneidmessers in beiden Richtungen. Diese Verstellung erfolgt spielfrei und ist in einem definierten Durchmesserbereich möglich. Muß somit der Schneiddurchmesser des Werkzeugs verändert werden, so kann dies einfach durch Verstellen der Differentialschraube in der gewünschten Richtung geschehen, und es ist in keiner Weise eine Lösung der Anordnung für einen weiteren Justiervorgang erforderlich.

Ein weiterer Vorteil der Ausgestaltung des Verstellglieds als Differentialschraube ergibt sich dadurch, daß sie eine raumsparende Ausgestaltung ermöglicht, denn anders als bei herkömmlichen Stellschrauben ist nun keine Durchgangsbohrung im Grundkörper des Werkzeugs mehr erforderlich. Vielmehr kann eine Verstellung der Differentialschraube von der Schneidenseite her erfolgen. Dies bietet mehr Raum für die Schneide und weitere Teile des Werkzeugs. Andererseits ist die Anordnung auch kompakter, denn es wird lediglich Raum für die Schneidplatte und das Verstellmittel benötigt. Der größere zur Verfügung stehende Raum ermöglicht mehr Einbauten. Beispielsweise können mehr Schneiden verwendet werden. Als kleinster zweckmäßiger Werkzeugdurchmesser erscheint derzent ein Werkzeug mit 10 mm Durchmesser, eingesetzt mit Verstellhub von ± 1 bis 2 mm.

Zweckmäßig ist üblicherweise für die Klemmbefestigung des Schneidmessers ein Spannkeil vorgesehen, der auf der Schneidmesserseite des Schneidmesserträgers durch das Spannglied befestigt ist. Bei dem Spannglied kann es sich um eine normale Spannschraube, aber auch um eine Differentialschraube handeln.

Vorteilhaft ist das Verstellglied mit halbem Gewinde vorgesehen. Dies spart Platz und ist insbesondere dadurch ermöglicht, daß die Verstellschraube lediglich verstellfunktion und keinerlei Kraftbeaufschlagung etc. ausführen muß.

Entsprechend den Anwendungen kann das Verstellglied unterschiedliche Gewindesteigungen in den beiden gegenläufigen Gewinden aufweisen, was je nach Steigungspaarung ein sehr feinfühliges Verstellen zuläßt.

Der Schneidmesserträger kann eine sich in Längsrichtung des Schneidmessers erstreckende Kassette sein, die Blockform aufweist und eine Ausnehmung für das Schneidmesser hat. Die Kassette kann beispielsweise aus Stahl sein und das Schneidmesser zum Beispiel aus Hartmetall oder Cermet und dieses kann durch eine Lötverbindung oder Formschluß mit der Kassette verbunden sein.

Geeignete Materialien für das Schneidmesser sind Hartmetall, Cermet, Keramik, polykristalliner Natur- und synthetischer Diamant als Dünn- und Dickfilm. Der Schneidmesserträger kann alternativ zu Stahl aus Hartmetall sein. Die Kassette kann offen mit Gewindeabschnitten bzw. komplementärer Ausnehmung für einen Eingriff mit dem Verstellglied auf ihrer dem Schneidmesser abgewandten Seite ausgebildet sein. In dieser Ausgestaltung ist die Kassette sehr raumsparend und eignet sich besonders gut für kleine Werkzeugdurchmesser. Da das Verstellglied lediglich zu Verstellzwecken dient, können problemlos Gewindeabschnitte für den Eingriff verwendet werden. Gleiches gilt für die komplementäre Ausnehmung in der Ausführungsvariante mit Formzwangseingriff. Dieser läßt sich auch bei offener Ausgestaltung realisieren.

Andererseits ist eine geschlossene Kassettenausführung ebenfalls vorteilhaft. In diesem Fall ist das Gewinde im Inneren der Kassette ausgeführt, entsprechend die komplementäre Ausnehmung, und es ergibt sich eine größere Auflage bzw. Eingriffsfläche.

Zur Sicherung der Kassette bei größeren Werkzeugdurchmessern ist die Kassette vorteilhaft mit Bohrungen für Stützschrauben versehen. Alternativ oder zusätzlich kann auch der Grundkörper eine Bohrung für eine Stützschraube zur Sicherung des Klemmkeils aufweisen.

Bei einem anderen bevorzugten Ausführungsbeispiel des erfindungsgemäßen Werkzeugs ist in der Kassette und/oder im Klemmkeil eine Nut als komplementäre Ausnehmung für das Verstell- und/oder Spannglied vorgesehen. Diese erstreckt sich in Längsrichtung der Kassette. Durch die Nutenform kann eine Anpassung an die Form des Kopfes des Verstellglieds oder Spannglieds erzielt werden, um den erwünschten Formschluß zu erzielen. Als Formen kommen beispielsweise Kugel, Ellipse, Rechteck, Trapez und viele mehr in Betracht. Es muß nur ein sicherer Betätigungseingriff sichergestellt werden.

Zum Vorspannen der Kassette und/oder des Klemmkeils nach außen können vorteilhaft Federn vorgesehen sein.

Bei einem vorteilhaften Ausführungsbeispiel des erfindungsgemäßen Werkzeugs steht ein in sich radialer Richtung erstreckender, im Grundkörper befestigter Sicherungsstift mit dem in bezug auf die Werkzeugspitze hinteren Ende der Kassette in Eingriff. Dieser Sicherungsstift hat die Aufgabe, die Kassette gegen die Aufnahme von Axialkräften und damit gegen Verschiebung zu sichern.

Des weiteren kann im Grundkörper eine Ausnehmung für einen Eingriff mit dem in bezug auf die Werkzeugspitze hinteren Ende der Kassette mit einer Form vorgesehen sein, die in ihrer Kontur der Form des Kassettenendes entspricht. Durch diesen Formschluß kommt es zu einer Konturanlage zwischen Kassette und Grundkörper, die eine sichere und stabile Aufnahme der axialen Schnittdrücke ermöglicht.

Das erfindungsgemäße Werkzeug kann mit einer oder mehreren Führungsleisten versehen sein. Diese bieten in üblicher Weise einen stabilen Lauf des Werkzeugs. Bei sehr kurzen Werkzeugen werden sie indessen nicht benötigt. Die Führungsleisten können aus Hartmetall, Cermet, Keramik, polykristallinem Natur- und synthetischem Diamant und anderen Hartstoffen bestehen. Sie können ohne Schicht, in einfacher Schicht und auch als Multilayer ausgebildet sein. Vorteilhaft ist mindestens eine Führungsleiste pro Schneide vorgesehen. Bei einem Ausführungsbeispiel eines Senk- und Reib-Schneidwerkzeuges sind zwei Führungsleisten pro Schneide vorgesehen.

Die Führungsleisten sind zweckmäßig zwischen den Schneiden am Umfang vorgesehen. Es kann jedoch auch eine Führungsleiste axial versetzt zur zugeordneten Schneide angeordnet sein. Auf diese Weise kann die Zahl der Führungsleisten pro Schneide und die erwünschte Führungswirkung trotz größerer Schneidenzahl beibehalten und so ein ruhiger, stabiler Werkzeuglauf trotz hoher Drehzahl und/oder großer Werkstückhärte gewährleistet werden.

Bei einer Anordnung von zwei Führungsleisten kann vorgesehen sein, diese in einem Umfangswinkelabstand von 120° zueinander und in bezug auf das Schneidmesser anzuordnen.

Die erfindungsgemäße raumsparende Anordnung des Schneidmessers und von dessen Verstelleinrichtungen ermöglichen es, in einfacher Weise ein oder mehrere Schneidmesser in axialem Abstand noch anzuordnen (Stufenwerkzeug). Ebenso können auch zwei oder mehrere Schneidmesser entlang des Umfangs angeordnet sein. Dadurch, daß mindestens eine Schneide verstellbar ist, kann eine Vorschneidstufe vorgesehen sein. Ein zweckmäßiges Ausführungsbeispiel weist zwei diametral angeordnete Schneidmesser auf. Außer einer oder mehreren am Umfang vorgesehenen Schneiden kann eine Stirnschneide oder ein Stirnschneidenbereich vorgesehen sein.

Statt einer Kassette kann alternativ als Schneidmesserträger eine Platte mit Verstellmechanismus und Differentialschraube vorgesehen sein.

Im Fall, daß das Verstellglied keine Differentialschraube, sondern beispielsweise ein Kugel- oder Klemmglied ist, ist dieses zweckmäßig an einem Stabkörper angebracht und konturmäßig mit entsprechenden Ausnehmungen des Schneidmesserträgers für einen Zwangseingriff angepaßt.

Zweckmäßig ist eine Innenkühlung vorgesehen. Im Fall von Sacklochbohrungen kann diese stirnseitig angeordnet sein, während sie im Fall von Durchgangsbohrungen zweckmäßig mit Umlenkung quer zur Durchgangsbohrung ausgeführt ist.

Bei dem erfindungsgemäßen Reib- und Senk-Schneidwerkzeug sind zweckmäßig eine zentrale axiale Kühlmittelbohrung im Werkzeugschaft und mindestens eine zum Schneidbereich führende Bohrung für Kühl- und/oder Schmiermittel vorgesehen und von der axialen Kühlmittelbohrung in deren vorderem Bereich führt mindestens eine Abzweigbohrung nach außen. Vorzugsweise mündet die Abzweigbohrung in eine koaxiale Zuleitbohrung, die sich axial mindestens teilweise über den Schneidbereich erstreckt, und von der koaxialen Zuleitbohrung führt mindestens eine Austrittsbohrung zum Schneidbereich.

Mit diesem Aufbau des Reib- und Senk-Schneidwerkzeugs kann Kühl- und Schmiermittel in den Schneidbereich zugeführt werden, auch wenn mehrere Schneiden vorgesehen sind. Die das Kühl- und Schmiermittel führende Bohrung durchläuft im vorderen bzw. Schneidbereich nicht den Zentralbereich des Grundkörpers, so daß an dieser Stelle keine Materialschwächung erfolgt. Vielmehr verläuft die Bohrung im Schneidbereich koaxial und in radialer Richtung in der Nähe der Schneiden und Führungsleisten, die zu kühlen oder zu schmieren sind. Durch die einfache Kanalausgestaltung sind die Bohrungsgeometrien sehr einfach und daher mit geringem Aufwand für die verschiedensten Arten von Reib-, Senk- und Bohrwerkzeugen realisierbar. Darüber hinaus kann zusätzlich die Kühlwirkung der das Kühlmittel durch den Werkzeugschaft zuführenden koaxialen Bohrung ausgenutzt werden.

Der Einsatz von Kühl- bzw. Schmiermittel bei dem erfindungsgemäßen Reib- und Senk-Schneidwerkzeug eignet sich besonders bei 10% und mehr ölhaltiger Emulsion.

Insbesondere ermöglicht es die erfindungsgemäße Bohrungsanordnung, auch Führungsleisten eines solchen Werkzeugs zu kühlen bzw. zu schmieren, so daß ein glatter und störungsfreier Werkzeuglauf gewährleistet ist. Zweckmäßig ist dann jeder Führungsleiste eine Austrittsbohrung zugeordnet. Das Kühl- und Schmiermittel kann so gezielt zugeführt werden und die Zwischenräume zwischen den Führungsrippen können gut von verbliebenem Spangut etc. gereinigt werden.

Vorzugsweise erstreckt sich die koaxiale Zuleitbohrung über die gesamte Länge des Schneidbereichs. Auf diese Weise kann das Kühl- und Schmiermittel über den gesamten Schneidbereich verteilt werden und an gewünschter Stelle über die Austrittsbohrungen den Schneiden oder Führungsrippen zugeleitet werden.

Eine besonders gute Kühl- und Schmierwirkung ergibt sich bei dem erfindungsgemäßen Reib- und Senk-Schneidwerkzeug, wenn axial versetzt mehrere Austrittsbohrungen vorgesehen sind. Die Zahl und axiale Anordnung der Austrittsbohrungen kann dann entsprechend der zu erwartenden mechanischen und damit thermischen Belastung des Schneidbereichs gewählt werden.

Zweckmäßig mündet die Austrittsbohrung in den Spanraum einer zugeordneten Schneide. Auf diese Weise gelangt das Kühl- und Schmiermittel direkt an die zu kühlende Schneide und das Spangut kann gelöst und fort transportiert werden.

Bei einem vorteilhaften Ausführungsbeispiel des erfindungsgemäßen Reib- und Senk-Schneidwerkzeugs führt die der Führungsleiste zugeordnete Austrittsbohrung in Drehrichtung vor der Führungsleiste nach außen, d.h. das Kühl- und Schmiermittel gelangt direkt zur zugehörigen Führungsleiste.

Vorzugsweise ist die Abzweigbohrung schräg nach vorne gerichtet. Der Kühl- und Schmiermittelstrahl kann so besonders einfach zur Schneidspitze gelangen.

Bei einer Ausführungsform des erfindungsgemäßen Reib- und Senk-Schneidwerkzeugs weist die der Führungsleiste zugeordnete Abzweig- und/oder Austrittsbohrung einen kleineren Durchmesser als die der Schneide zugeordnete Bohrung auf. Dadurch wird der mechanisch stärker beanspruchten Schneide mehr Kühlmittel als den Führungsleisten zugeführt.

Es kann ferner vorteilhaft zur Erhöhung der Kühl- und Schmierwirkung im Außenumfang des Grundkörpers mindestens eine Freimachung vorgesehen sein, in die mindestens eine Austrittsbohrung mündet.

Zur zusätzlichen Kühlung der Führungsleisten können diese mindestens eine durch sie nach außen verlaufende Austrittsbohrung aufweisen.

Das erfindungsgemäße Werkzeug eignet sich für Reib- und Senksysteme und kann auch für stirnschneidende Werkzeuge eingesetzt werden.

Die Erfindung wird im folgenden weiter anhand von Ausführungsbeispielen und der Zeichnung beschrieben. Diese Darstellung dient lediglich zur Erläuterung der Erfindung und soll im einzelnen, ebenso wie die Zusammenfassung der Merkmale in den Unteransprüchen, nicht zur Einschränkung der Erfindung herangezogen werden. In der Zeichnung zeigen:

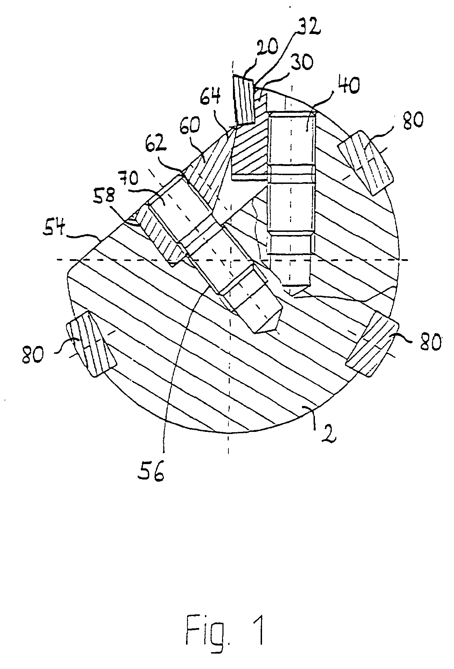

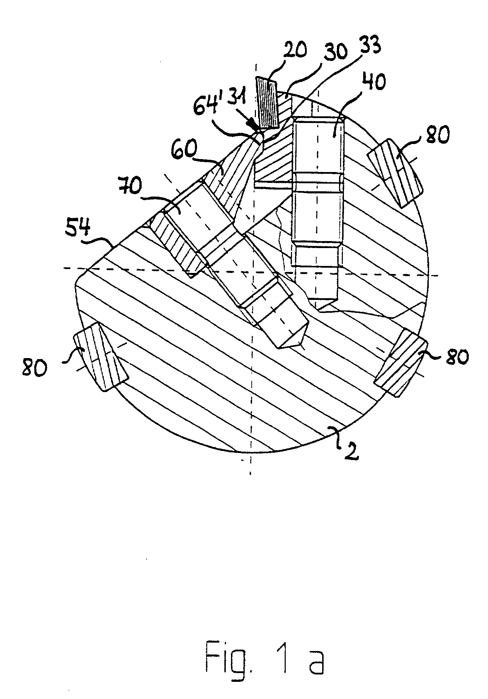

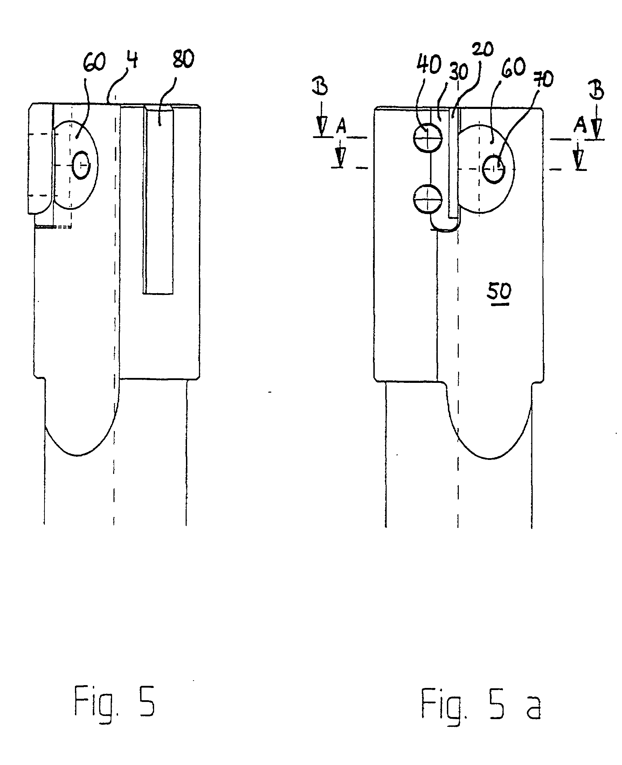

- Fig. 1: eine zum Teil fortgebrochene Schnittansicht eines ersten Ausführungsbeispiels eines erfindungsgemäßen Reib- und Schneidwerkzeuges mit drei Führungsleisten, ausgeführt längs Linie B-B in Fig. 5,
- Fig. 1 a: eine zum Teil fortgebrochene Schnittansicht einer Variante des in Fig. 1 dargestellten Reib- und Schneidwerkzeuges mit anderem Klemmeingriffsbereich zwischen Klemmkeil und Schneidkassette, ebenfalls ausgeführt längs Linie B-B in Fig. 5,
- Fig. 2: eine zum Teil fortgebrochene Schnittansicht eines zweiten Ausführungsbeispiels eines erfindungsgemäßen Reib- und Schneidwerkzeuges mit zwei Führungsleisten, ausgeführt längs Linie B-B in Fig. 5,
- Fig. 3: eine zum Teil fortgebrochene schematische Schnittansicht eines dritten Ausführungsbeispiels eines ohne Führungsleisten ausgestatteten erfindungsgemäßen Reib- und Schneidwerkzeugs mit zwei diametral angeordneten Schneidmessern und gegenüberliegenden Klemmkeilen,
- Fig. 4: eine zum Teil fortgebrochene schematische Schnittansicht eines vierten Ausführungsbeispiels eines erfindungsgemäßen Reib- und Schneidwerkzeuges mit zwei diametral angeordneten Schneidmessern, zwei Führungsleisten und gegenüberliegenden Klemmkeilen,

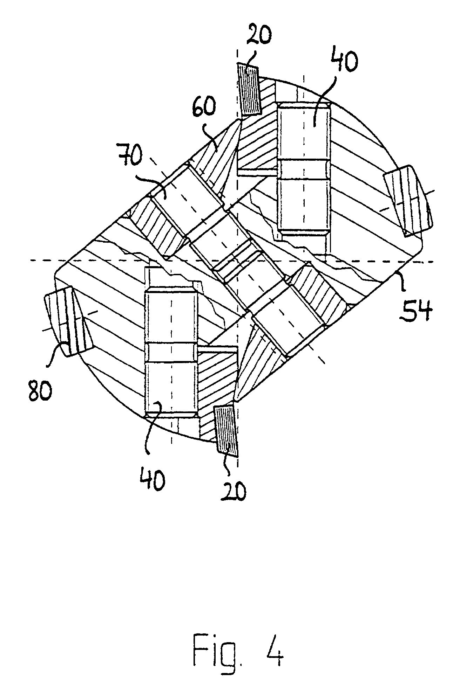

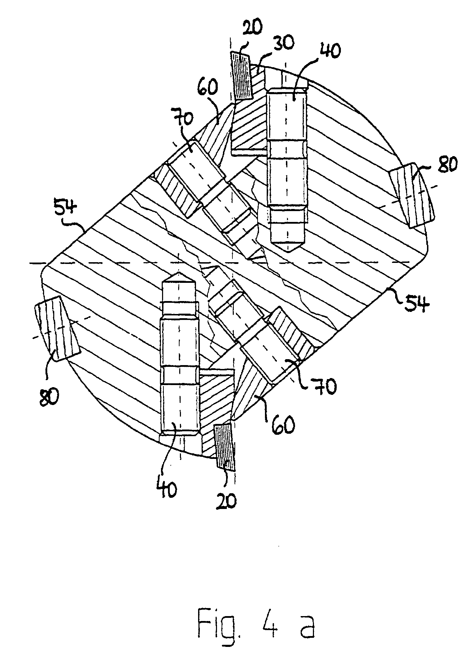

- Fig. 4 a: eine zum Teil fortgebrochene schematische Schnittansicht einer Variante des in Fig. 4 dargestellten Reib- und Schneidwerkzeugs mit zwei diametral angeordneten Schneidmessern, zwei Führungsleisten und versetzt angeordneten Klemmkeilen,
- Fig. 5: eine Draufsicht auf das Werkzeug, die das Schneidmesser, Kassette, Verstellglied und Klemmbefestigung zeigt,
- Fig. 5 a: eine Ansicht ähnlich Fig. 5, bei der das Werkzeug um 90° nach rechts gedreht ist,

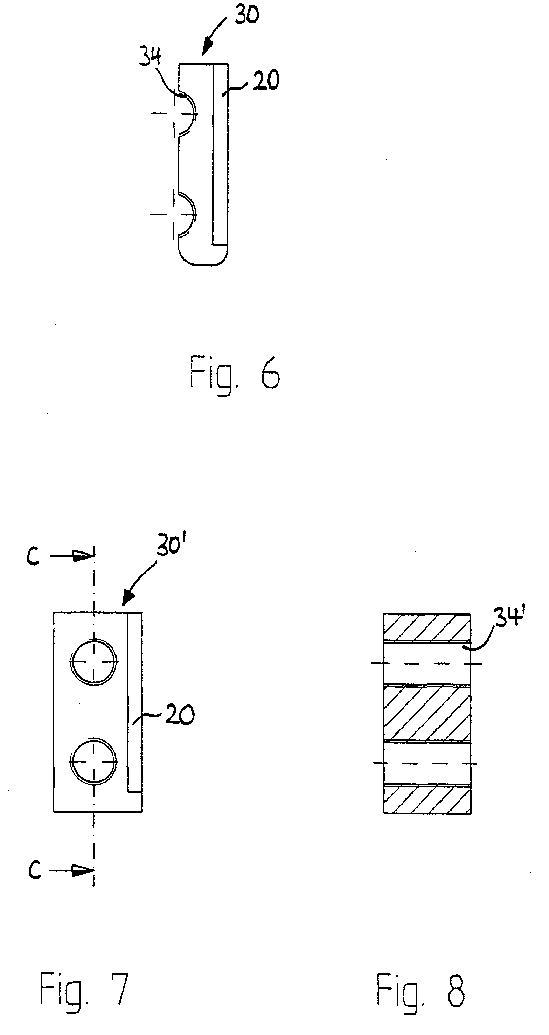

- Fig. 6: eine Ansicht der Schneidkassette in offener Bauweise,
- Fig. 7: eine Draufsicht einer geschlossen ausgeführten Kassette,
- Fig. 8: eine Schnittansicht längs Linie C-C in Fig. 7,

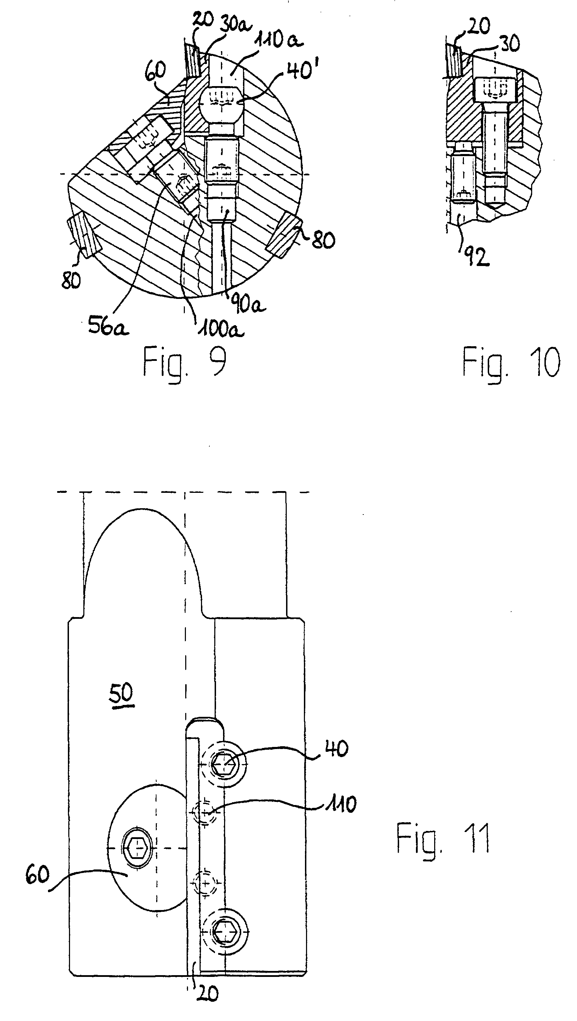

- Fig. 9: eine zum Teil fortgebrochene Schnittansicht eines fünften Ausführungsbeispiels eines erfindungsgemäßen Reib- und Schneidwerkzeuges, ähnlich Fig. 1,
- Fig. 10: eine Teilansicht einer Kassette gemäß einem sechsten Ausführungsbeispiel,

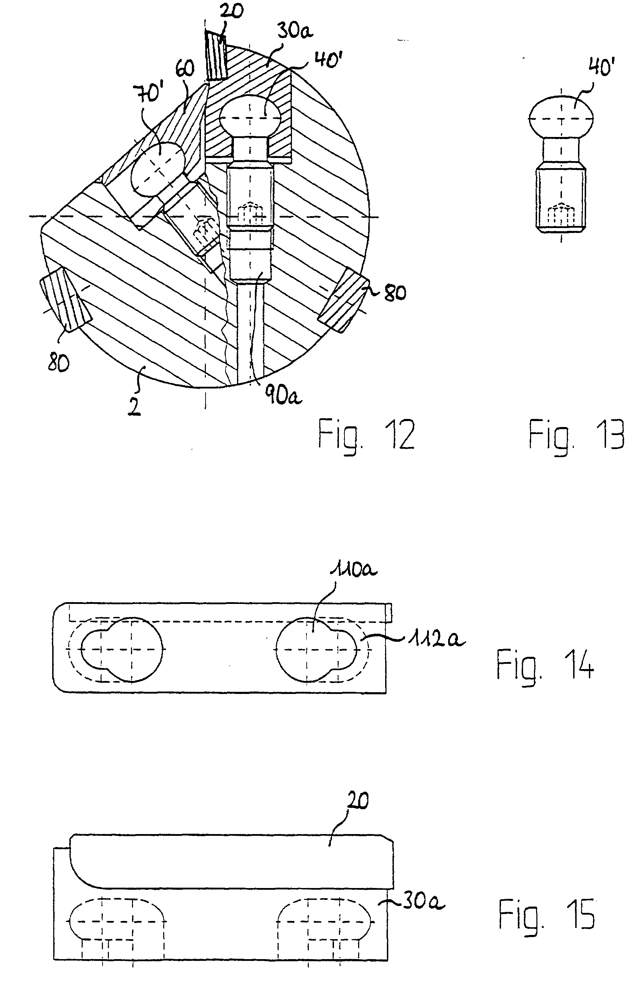

- Fig. 11: eine Ansicht ähnlich Fig. 5, bei der die Kassette zusätzlich Bohrungen für Stützschrauben aufweist,
- Fig. 12: eine zum Teil fortgebrochene Schnittansicht eines siebten Ausführungsbeispiels eines erfindungsgemäßen Reib- und Schneidwerkzeugs, ähnlich Fig. 1,
- Fig. 13: eine Ansicht eines als Kugelglied ausgeführten Verstellglieds,
- Fig. 14 bis 17: verschiedene Ansichten der Kassette und des Klemmkeils entsprechend den Ausführungsbeispielen von Fig. 9 und 12, die die Formschlußanordnung der Verstell- und Spannglieder veranschaulichen,

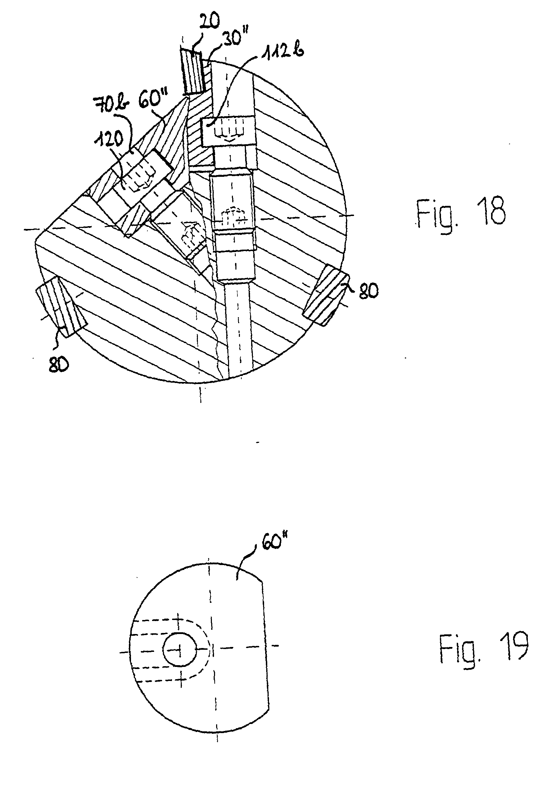

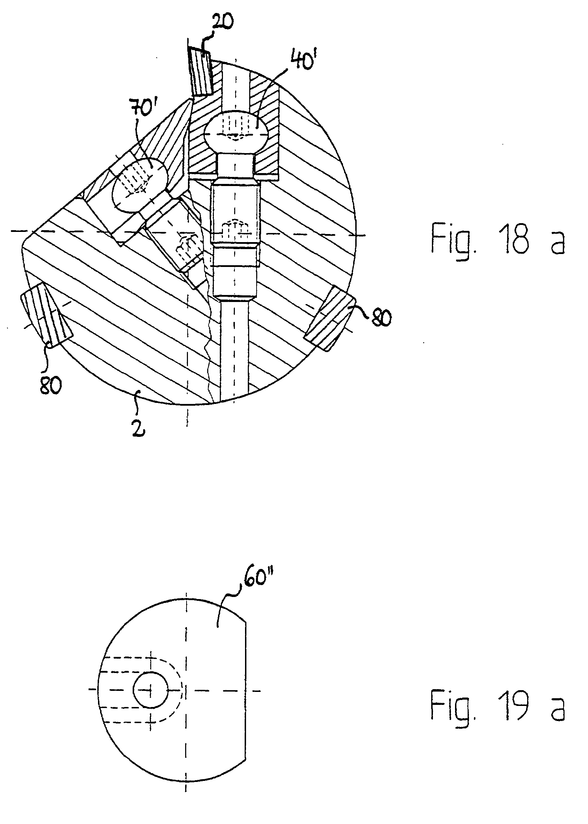

- Fig. 18: eine zum Teil fortgebrochene Schnittansicht eines achten Ausführungsbeispiels eines erfindungsgemäßen Reib- und Schneidwerkzeugs, ähnlich Fig. 1,
- Fig. 18 a: eine zum Teil fortgebrochene Schnittansicht einer Variante des Reib- und Schneidwerkzeugs von Fig. 8 mit Formeingriff des Verstellglieds,
- Fig. 19: eine Draufsicht des Klemmkeils von Fig. 18,
- Fig. 19 a: eine Draufsicht des Klemmkeils von Fig. 18 a,

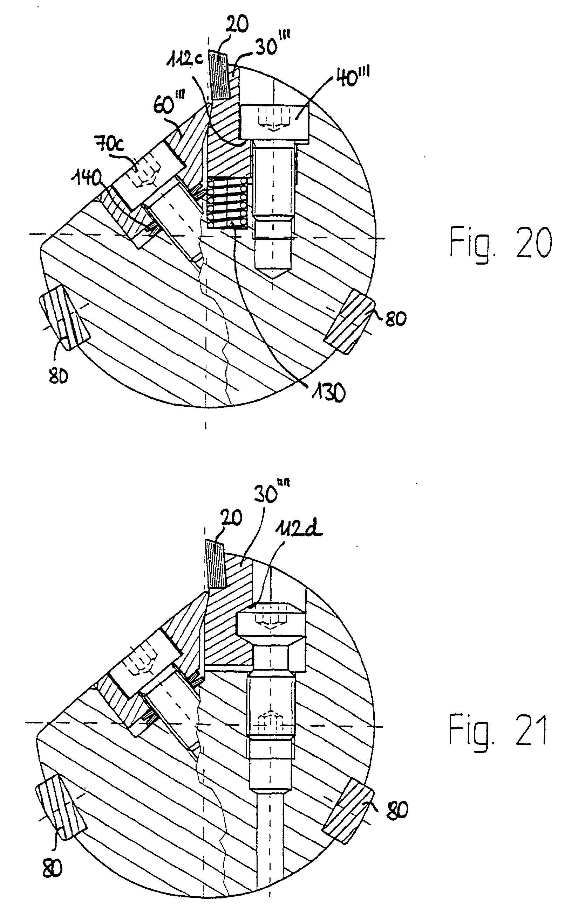

- Fig. 20: eine zum Teil fortgebrochene Schnittansicht eines neunten Ausführungsbeispiels eines erfindungsgemäßen Reib- und Schneidwerkzeugs, ähnlich Fig. 1,

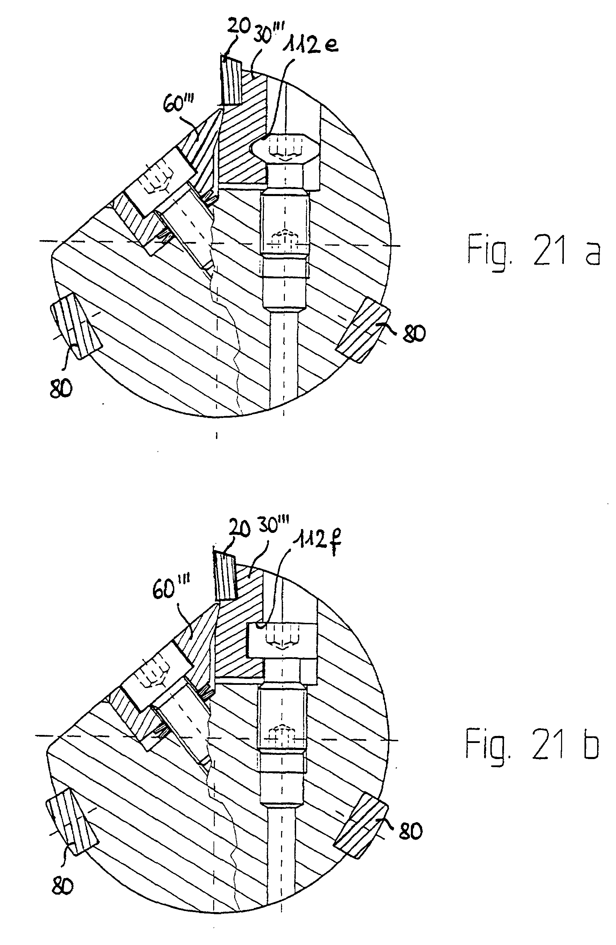

- Fig. 21: eine zum Teil fortgebrochene Schnittansicht eines zehnten Ausführungsbeispiels eines erfindungsgemäßen Reib- und Schneidwerkzeugs, ähnlich Fig. 1,
- Fig. 21 a: eine zum Teil fortgebrochene Schnittansicht einer Variante des Reib- und Schneidwerkzeugs von Fig. 21 mit anderem Formschlußeingriff von Verstellmittel und Verstellglied,
- Fig. 21 b: eine zum Teil fortgebrochene Schnittansicht einer weiteren Variante des Reib- und Schneidwerkzeugs von Fig. 21 mit anderem Formschlußeingriff von Verstellmittel und Verstellglied,

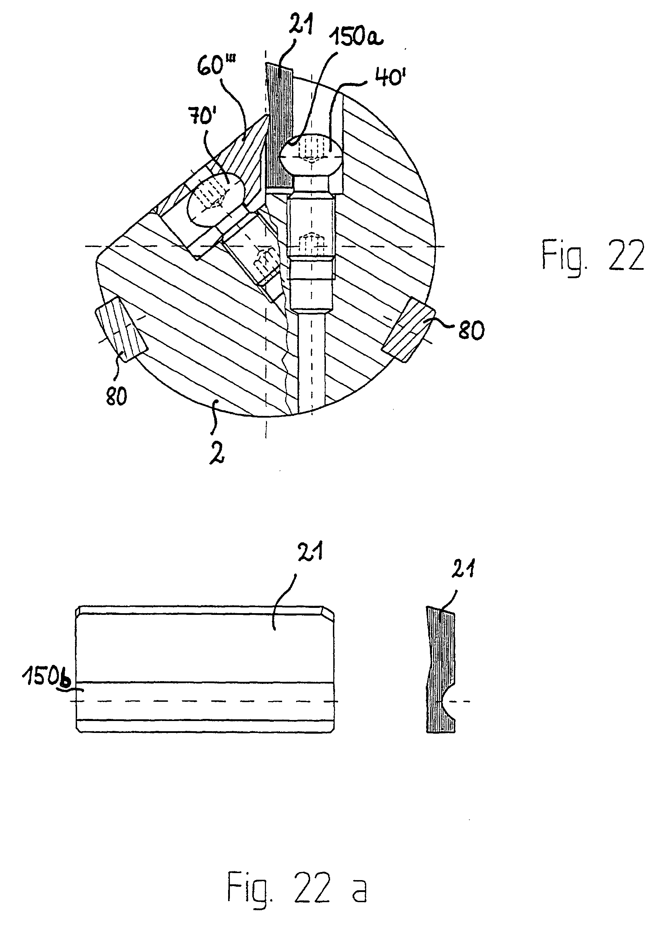

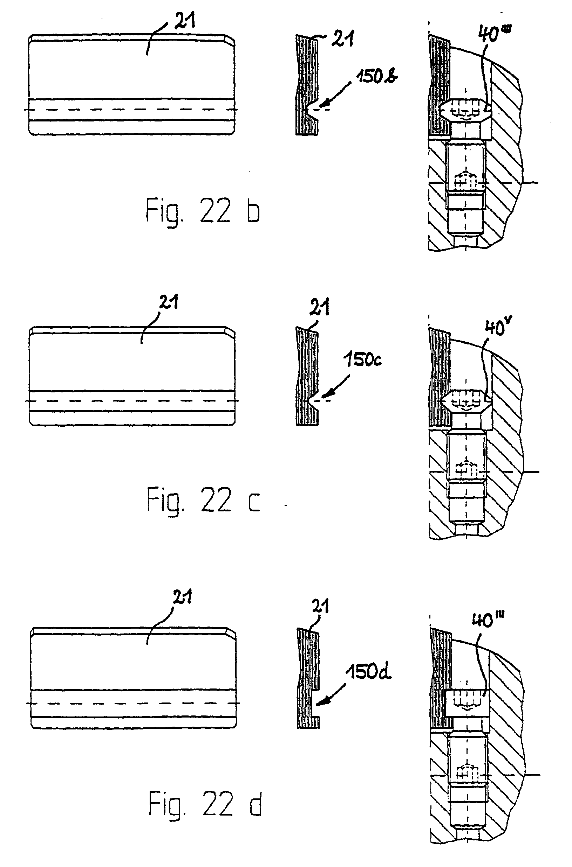

- Fig. 22: eine zum Teil fortgebrochene Schnittansicht eines elften Ausführungsbeispiels eines erfindungsgemäßen Reib- und Schneidwerkzeugs, ähnlich Fig. 1, bei dem das Schneidmesser selbst Verstellglied ist,
- Fig. 22 a bis d: Varianten des Reib- und Schneidwerkzeugs von Fig. 22, bei denen die Ausnehmungsform des Schneidmessers unterschiedlich ist,

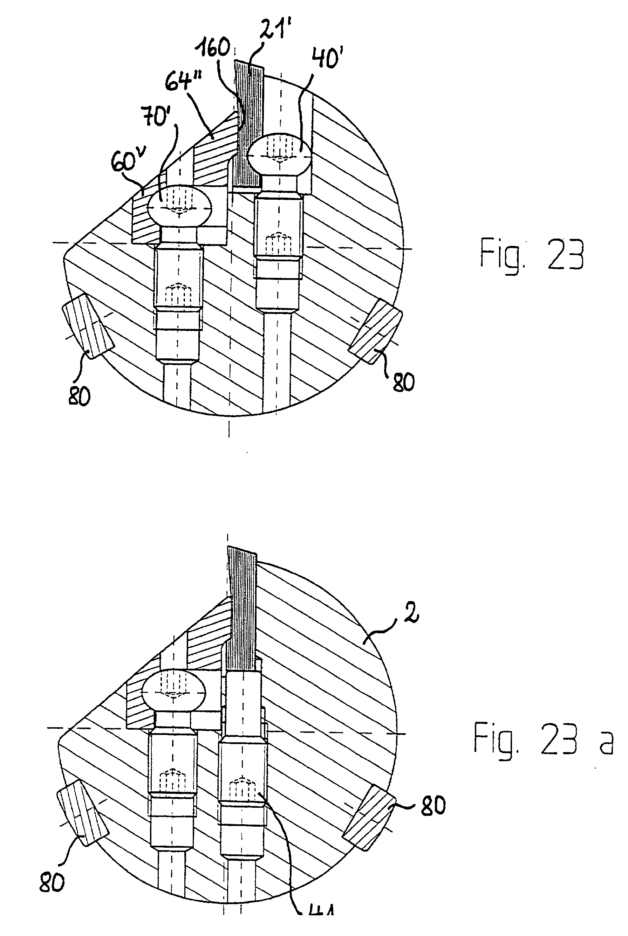

- Fig. 23: eine zum Teil fortgebrochene Schnittansicht eines zwölften Ausführungsbeispiels eines erfindungsgemäßen Reib- und Schneidwerkzeugs, ähnlich Fig. 1,
- Fig. 23 a: eine zum Teil fortgebrochene Schnittansicht des Reib- und Schneidwerkzeugs von Fig. 23,

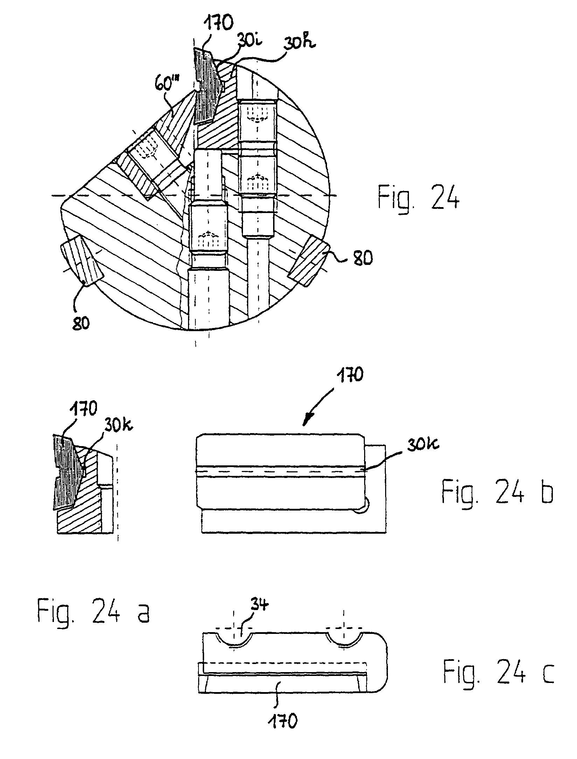

- Fig. 24: eine zum Teil fortgebrochene Schnittansicht eines dreizehnten Ausführungsbeispiels eines erfindungsgemäßen Reib- und Schneidewerkzeugs, ähnlich Fig. 1, bei dem die Kassettte mit Formschluß-Klemmverbindung des Schneidmessers ist,

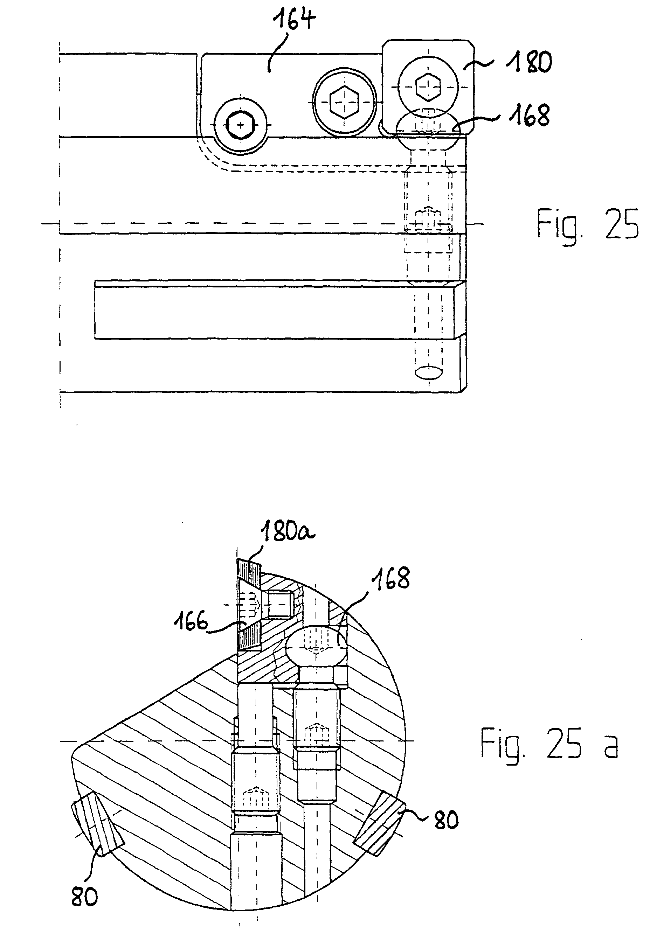

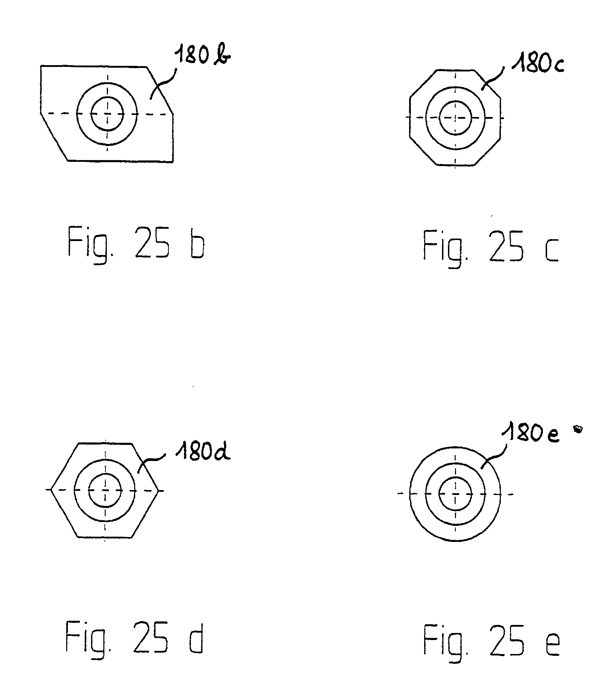

- Fig. 25: eine Seitenansicht eines vierzehnten Ausführungsbeispiels eines erfindungsgemäßen Reib- und Schneidwerkzeugs mit auswechselbarer Kassette,
- Fig. 25 a: eine Schnittansicht des Reib- und Schneidwerkzeugs von Fig. 25,
- Fig. 25 b bis Fig. 25 e: verschiedene Schneidmesserformen des Reib- und Schneidwerkzeugs von Fig. 25,

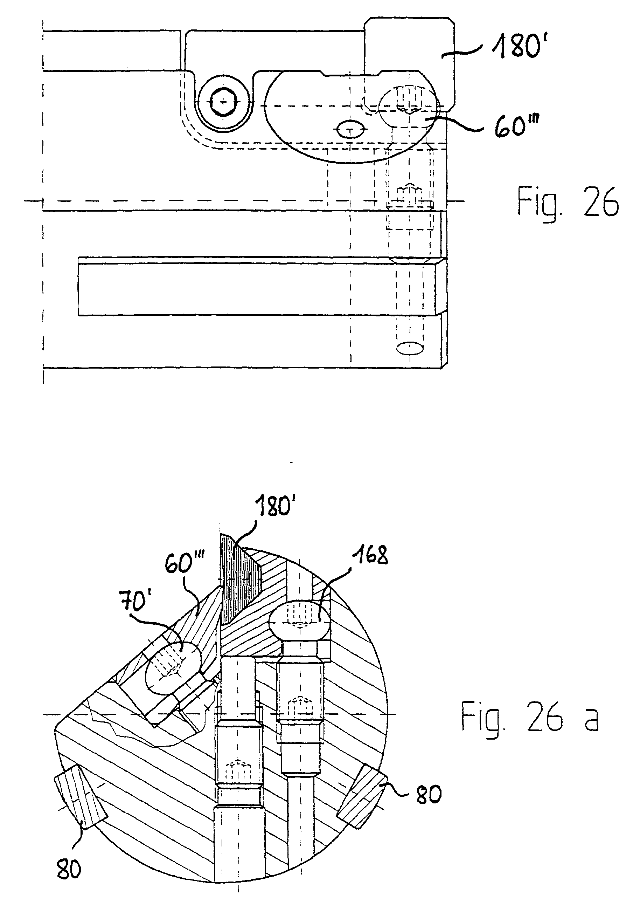

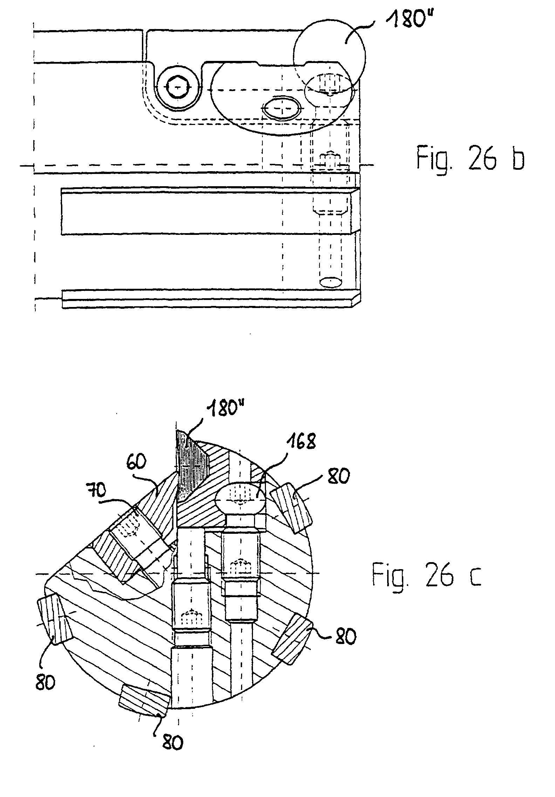

- Fig. 26: eine Seitenansicht eines fünfzehnten Ausführungsbeispiels eines erfindungsgemäßen Reib- und Schneidwerkzeugs mit auswechselbarer Kassette,
- Fig. 26 a: eine Schnittansicht des Reib- und Schneidwerkzeugs von Fig. 26,
- Fig. 26 b: eine Seitenansicht einer Variante des in Fig. 26 und Fig. 26 a dargestellten Reib- und Schneidwerkzeugs mit anderer Form des Schneidmessers,
- Fig. 26 c: eine Schnittansicht des Reib- und Schneidwerkzeugs von Fig. 26 b,

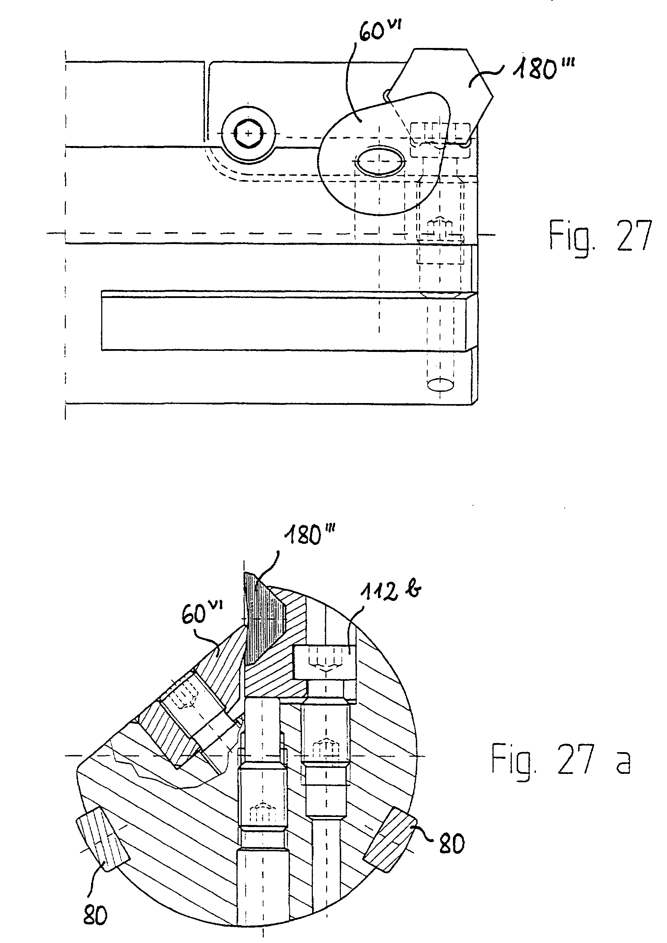

- Fig. 27: eine Seitenansicht eines sechzehnten Ausführungsbeispiels eines erfindungsgemäßen Reib- und Schneidwerkzeugs mit anderer Form von Schneidmesser und Klemmkeil,
- Fig. 27 a: eine Schnittansicht des Reib- und Schneidwerkzeugs von Fig. 27,

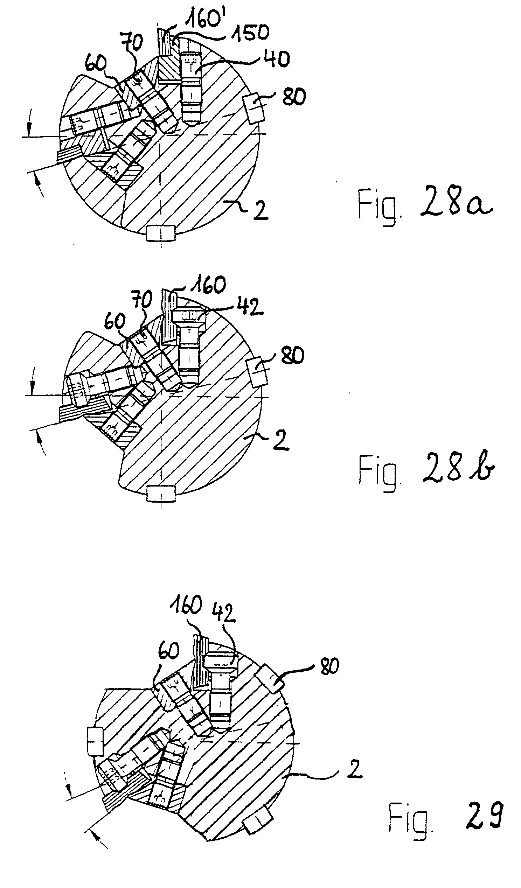

- Fig. 28 a: einen Querschnitt durch ein siebzehntes Ausführungsbeispiel eines erfindungsgemäßen Reib- und Schneidwerkzeugs mit zwei Schneiden und zwei gegenüberliegend angeordneten Führungsleisten,
- Fig. 28 b: einen Querschnitt durch ein achtzehntes Ausführungsbeispiel eines erfindungsgemäßen Reib- und Schneidwerkzeugs mit zwei Schneiden und zwei gegenüberliegend angeordneten Führungsleisten,
- Fig. 29: einen Querschnitt durch ein neunzehntes Ausführungsbeispiel eines erfindungsgemäßen Reib- und Schneidwerkzeugs mit zwei Schneiden und drei Führungsleisten,

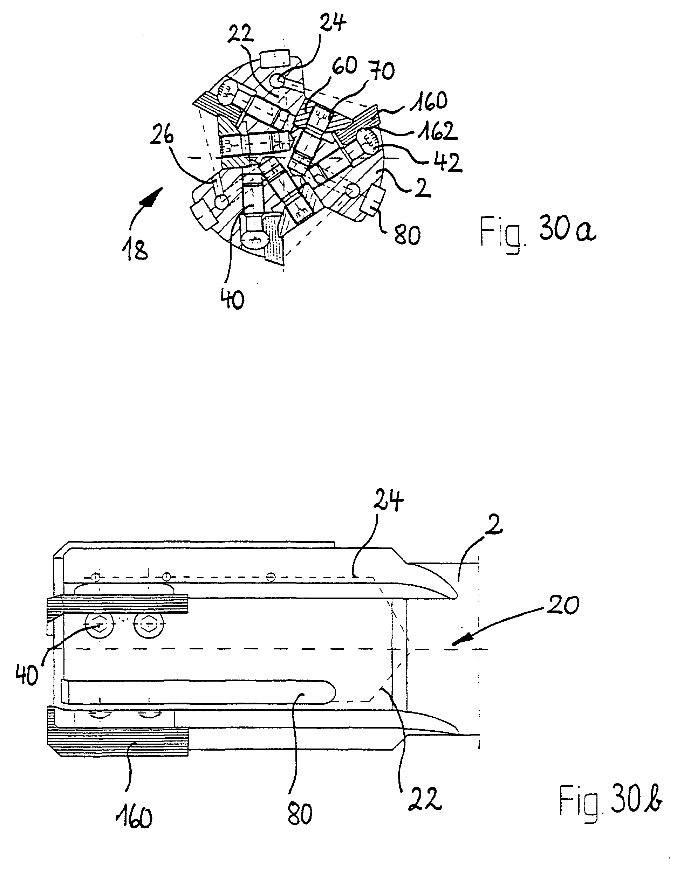

- Fig. 30 a: einen Querschnitt durch ein zwanzigstes Ausführungsbeispiel eines erfindunsgemäßen Reib- und Schneidwerkzeugs mit drei verstellbaren Schneiden und drei Führungsleisten,
- Fig. 30 b: einen Längsschnitt durch das Reib- und Schneidwerkzeug von Fig. 30 a,

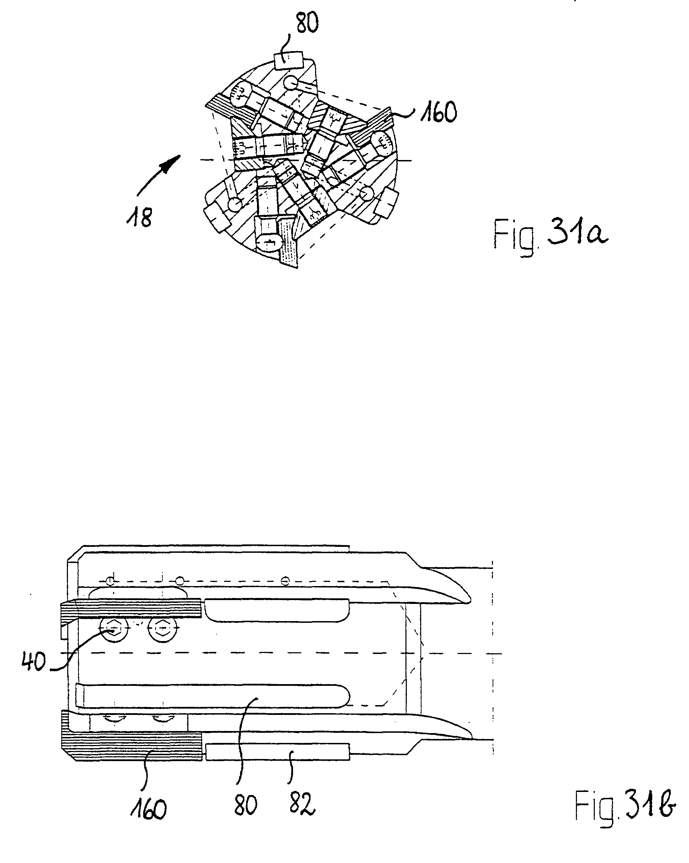

- Fig. 31 a: einen Querschnitt durch ein einundzwanzigstes Ausführungsbeispiel eines erfindungsgemäßen Reib- und Schneidwerkzeugs mit drei verstellbaren Schneiden und sechs Führungsleisten,
- Fig. 31 b: einen Längsschnitt durch das Reib- und Schneidwerkzeug von Fig. 31 a,

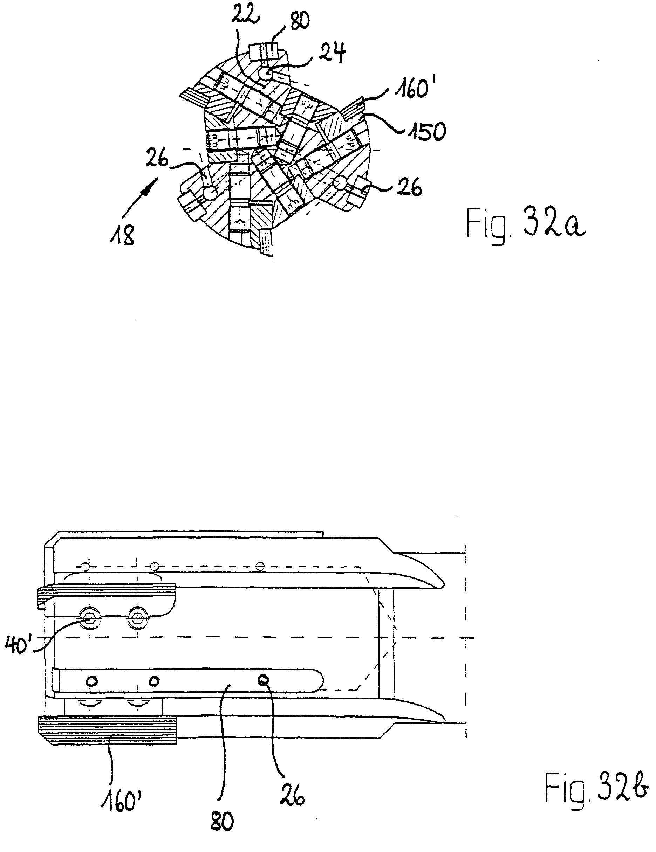

- Fig. 32 a: einen Querschnitt durch ein zweiundzwanzigstes Ausführungsbeispiel eines erfindungsgemäßen Reib- und Schneidwerkzeugs mit drei verstellbaren Schneiden und drei Führungsleisten,
- Fig. 32 b: einen Längsschnitt durch das Reib- und Schneidwerkzeug von Fig. 32 a,

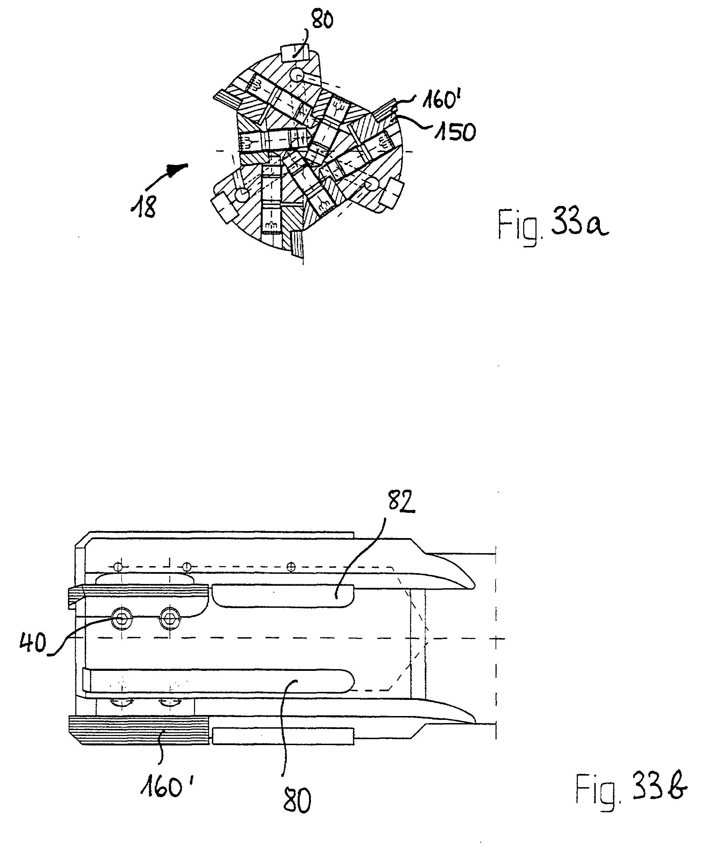

- Fig. 33 a: einen Querschnitt durch ein dreiundzwanzigstes Ausführungsbeispiel eines erfindungsgemäßen Reib- und Schneidwerkzeugs mit drei verstellbaren Schneiden und sechs Führungsleisten,
- Fig. 33 b: einen Längsschnitt durch das Reib- und Schneidwerkzeug von Fig. 33 a,

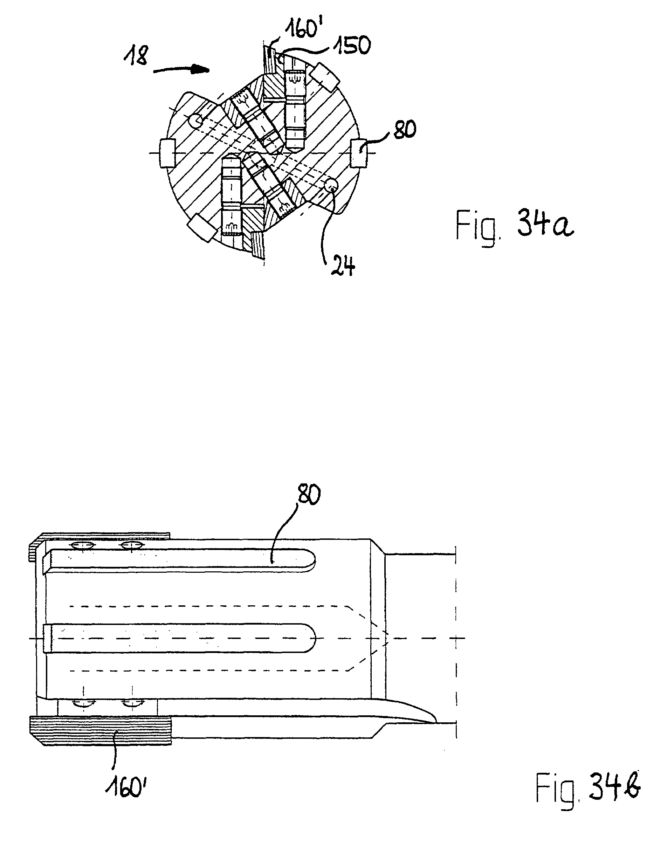

- Fig. 34 a: einen Querschnitt durch ein vierundzwanzigstes Ausführungsbeispiel eines erfindungsgemäßen Reib- und Schneidwerkzeugs mit zwei verstellbaren Schneiden und vier Führungsleisten,
- Fig. 34 b: einen Längsschnitt durch das Reib- und Schneidwerkzeug von Fig. 34 a,

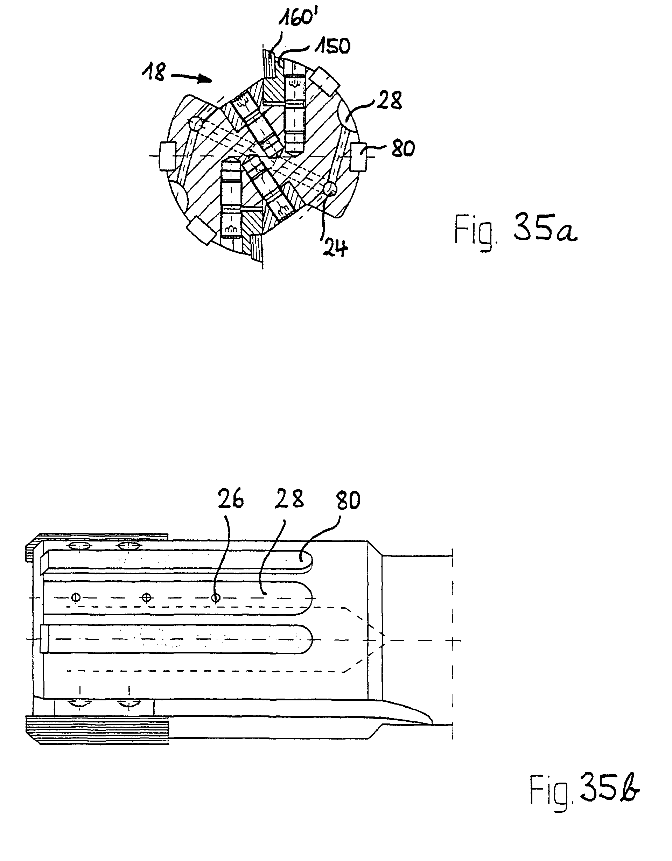

- Fig. 35 a: einen Querschnitt durch ein fünfundzwanzigstes Ausführungsbeispiel eines erfindungsgemäßen Reib- und Schneidwerkzeugs ähnlich dem einundzwanzigsten Ausführungsbeispiel, das am Außenumfang des Grundkörpers zwei Freimachungen aufweist,
- Fig. 35 b: einen Längsschnitt durch das Reib- und Schneidwerkzeug von Fig. 35 a,

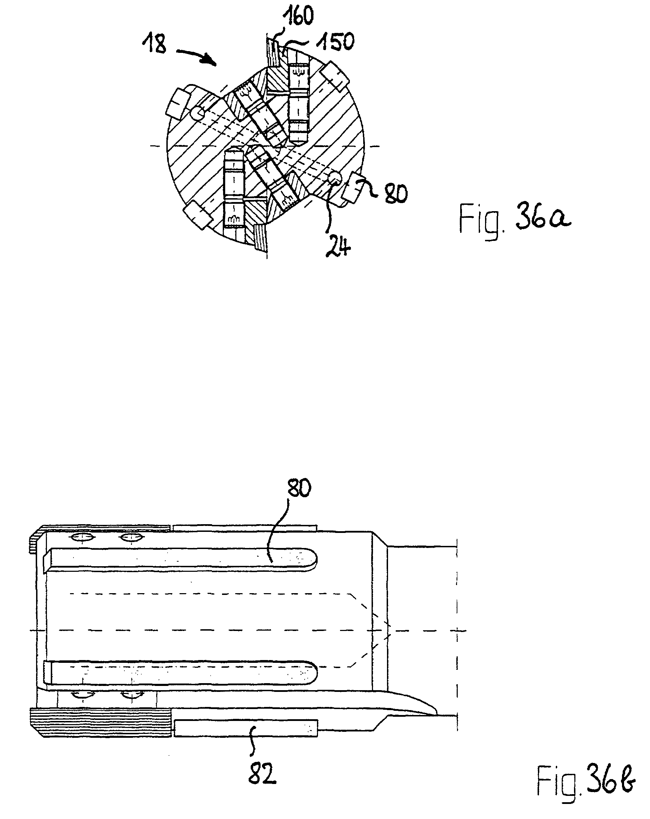

- Fig. 36 a: einen Querschnitt durch ein sechsundzwanzigstes Ausführungsbeispiel eines erfindungsgemäßen Reib- und Schneidwerkzeugs mit zwei verstellbaren Schneiden und sechs Führungsleisten,
- Fig. 36 b: einen Längsschnitt durch das Reib- und Schneidwerkzeug von Fig. 36 a und

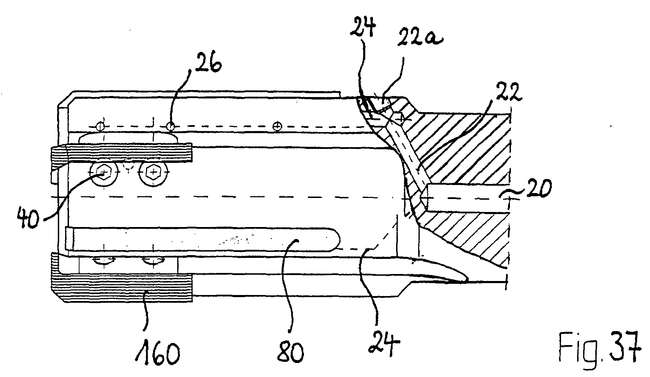

- Fig. 37: einen teilweise fortgebrochenen Längsschnitt durch einen Werkzeugschaft eines Reib- und Schneidwerkzeugs, der die Anordnung der Kühlmittelbohrungen veranschaulicht.

In der Zeichnung werden stets gleiche Bezugszeichen für gleiche Teile verwendet.

Es wird zunächst auf Fig. 1 Bezug genommen, die den grundsätzlichen Aufbau des erfindungsgemäßen Schneidwerkzeugs im Bereich der Klemmbefestigung und Verstellanordnung des Schneidmessers zeigt. Das veranschaulichte Werkzeug ist ein Reibwerkzeug (Reibahle). Hierauf ist die Erfindung jedoch nicht beschränkt.

Das Werkzeug hat einen zylindrischen Grundkörper 2, der im vorliegenden Ausführungsbeispiel einen flachen Stirnabschnitt 4 aufweist (vgl. Fig. 5). Längs des Umfangs weist der Grundkörper 2 drei Führungsleisten 80 auf. Am vorderen Ende trägt der Grundkörper 2 am Umfang ein Schneidmesser 20 aus Hartmetall, das durch Löten in einer Ausnehmung 32 einer den Schneidmesserträger bildenden Kassette 30 aus Stahl befestigt ist. Das Schneidmesser 20 ist in seiner radialen Position durch einen noch beschriebenen Verstellmechanismus verstellbar und durch eine noch beschriebene Klemmbefestigung gehaltert, wobei es austauschbar ist.

Die Kassette 30 (vgl. Fig. 6) ist somit ein sich zumindest über die Länge des Schneidmessers 20 in Längsrichtung erstreckender leistenartiger Massivkörper. Auf der dem Schneidmesser 20 abgewandten Seite weist die Kassette 30 zwei offene Gewindeabschnitte 34 auf, über die sie mit einem Verstellglied, hier einer Differentialschraube 40, mit gegenläufigen Gewinden jeweils in Eingriff steht. Über diesen Gewindeeingriff ist die Kassette und damit das Schneidmesser 20 in der radialen Richtung einwärts und auswärts verstellbar, so daß die Kassette gleichzeitig Schneidmesserträger und Verstellmittel ist. Die Differentialschraube 40 ermöglicht es, die Kassette in einem definierten Durchmesserbereich, beispielsweise bei einem Bohrerdurchmesser von 10 mm um ± 1 bis 2 mm, stufenlos und spielfrei zu verstellen. Da die Differentialschraube lediglich Verstellfunktion hat, ist die raumsparende Bauweise mit Halbgewinde möglich.

Die Schneidmesseranordnung befindet sich am Rand eines ausgesparten Spanraums 50, der sich über einen Umfangswinkel von 130° erstreckt. Im Grundkörper 2 ist eine Nut 52 für die Kassette ausgespart. An die Nut 52 schließt sich die Bohrung 42 für die Differentialschraube 40 an.

Die Klemmbefestigung der Schneidmesseranordnung wird nun im folgenden erläutert. Direkt in Eingriff mit der Kassette 30 steht ein Spannkeil 60, der fluchtend mit der Begrenzungswand 54 des Spanraums 50 abschließt. Der Spannkeil 60 weist eine Gewindebohrung 62 auf, der im Grundkörper 2 eine sich radial einwärts erstreckende Gewindebohrung 56 im montierten Zustand gegenüberliegt. Für den Klemmbefestigungseingriff ist eine Spannschraube 70 vorgesehen, bei der es sich ebenfalls um eine Differentialschraube handeln kann. Im Klemmeingriff befindet sich der Spannkeil 60 bündig in Anlage an der Wand 58 des Grundkörpers und mit dem keilförmigen zulaufenden Endbereich 64 in Klemmeingriff mit der Kassette 30.

Der Grundkörper 2 trägt an seinem Umfang drei Führungsleisten 80 aus Hartmetall. Die Führungsleisten dienen der Unterstützung eines ruhigen Werkzeuglaufs durch ihre Zentrierungswirkung.

Eine in Fig. 1 a dargestellte Variante des Schneidwerkzeugs von Fig. 1 unterscheidet sich lediglich in der Ausgestaltung des keilförmigen Endbereichs des Klemmkeils 60. Der hier veranschaulichte Endbereich 64'ist ein Vorsprung mit Auflagefläche, der sich in Eingriff in einer Rinnenaufnahme 33 der Kassette 30 befindet. Im übrigen wird dieses Werkzeug nicht weiter beschrieben und vielmehr auf das Obenstehende Bezug genommen.

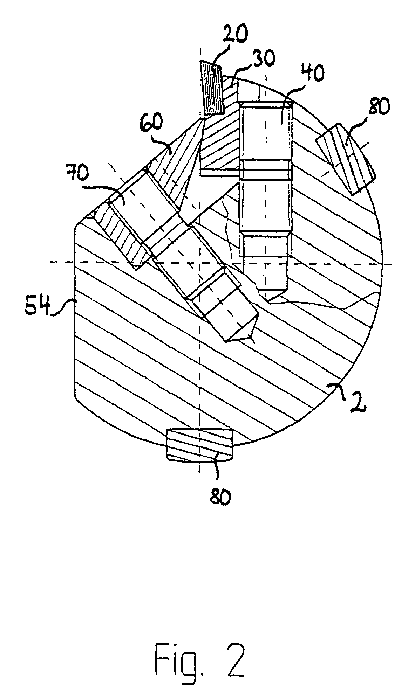

Fig. 2 zeigt ein zweites Ausführungsbeispiel einer Reibahle gemäß der Erfindung mit zwei Führungsleisten 80. Die in Fig. 2 untere Führungsleiste 80 liegt dem Schneidmesser 20 gegenüber.

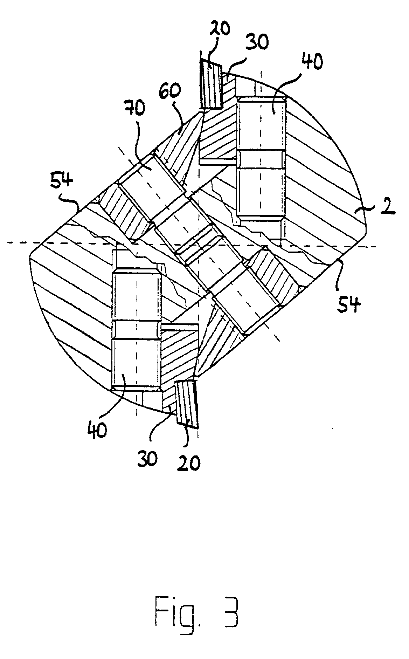

Ein in Fig. 3 dargestelltes drittes Ausführungsbeispiel einer Reibahle gemäß der Erfindung weist zwei gegenüberliegende Schneidmesser 20 auf. Die Klemmkeile 60 sind einander gegenüberliegend angeordnet und sind mittels fluchtender Spannschrauben 70 befestigt. Die Reibahle weist keine Führungsleisten auf. Diese Ausführung eignet sich insbesondere für kleine Durchmesser.

Die in Fig. 4 veranschaulichte Reibahle gemäß einem vierten Ausführungsbeispiel der Erfindung unterscheidet sich von der vorhergehend beschriebenen darin, daß hier zwei Führungsleisten 80 gegenüberliegend angeordnet sind.

Fig. 4 a veranschaulicht eine Variante der Reibahle von Fig. 4, bei der die Klemmkeile 60 mit ihren Spannschrauben 70 in bezug aufeinander versetzt angeordnet sind.

Fig. 7 und 8 zeigen ein alternatives Ausführungsbeispiel einer Kassette 30', die geschlossen ausgeführt ist und zwei sich durch ihren Körper erstreckende Vollgewinde 34' aufweist. Diese Ausführung ist voluminöser als die offene Bauweise, bietet jedoch den Vorteil einer erhöhten Stabilität und Auflagefläche.

Fig. 9 zeigt ein fünftes Ausführungsbeispiel eines Werkzeugs ähnlich dem in Fig. 1 beschriebenen ersten Ausführungsbeispiel, jedoch mit größerem Durchmesser. Dieses weist eine das Schneidmesser 20 tragende, geschlossen ausgeführte Kassette 30a auf, die entsprechend breiter ist und auf der Außenseite eine Bohrung 110a für eine Stützschraube aufweist, die mit einem hier als Kugelglied 40' ausgeführten Verstellglied in Eingriff steht. Ein solches Verstell- bzw. Kugelglied 40' ist einzeln in Fig. 13 veranschaulicht. Auf der Werkzeuginnenseite weist die Kassette 30a eine weitere, mit der Bohrung 110a fluchtende Bohrung 90a zur Aufnahme einer Stützschraube auf, die ebenfalls Stabilisierungszwecken dient. Die Bohrung 90a ist von der gegenüberliegenden Seite des Grundkörpers 2 her zugänglich. Auch die Bohrung 56a im Grundkörper 2 ist mit einer fluchtenden weiteren Bohrung 100a verlängert, die ebenfalls zur Aufnahme einer Stützschraube vorgesehen ist. Die als Stützschrauben vorgesehenen Konter- bzw. Stellschrauben dienen lediglich Sicherungszwecken, nicht der Verstellung selbst, und sie werden bei größeren Werkzeugdurchmessern eingesetzt, bei denen größere Schnittkräfte auftreten, die an der Kassette über das Schneidmesser und die Halterungsteile angreifen.

Bei der in Fig. 10 veranschaulichten Variante sind im Vergleich zu dem in Fig. 9 gezeigten Ausführungsbeispiel die Bohrungen für das Verstellglied 40 und die zugehörige Stützschraube nicht fluchtend. Vielmehr ist die Bohrung 92 für die Stützschraube in bezug auf die Differentialschraubenbohrung 110a einwärts in Richtung Schneidmesser versetzt angeordnet. Es können auch Stützschrauben von außen angebracht werden, wie die in Fig. 11 veranschaulichten Bohrungen 110 zeigen.

Fig. 12 zeigt ein siebtes Ausführungsbeispiel, bei dem die Spannschraube und auch das Verstellglied als Kugelglied (Formteil) alternativ ausgeführt sind. Statt eines Kugelgliedes könnte wie auch in den anderen Fällen beispielsweise ein ellipsenförmiges Teil verwendet werden.

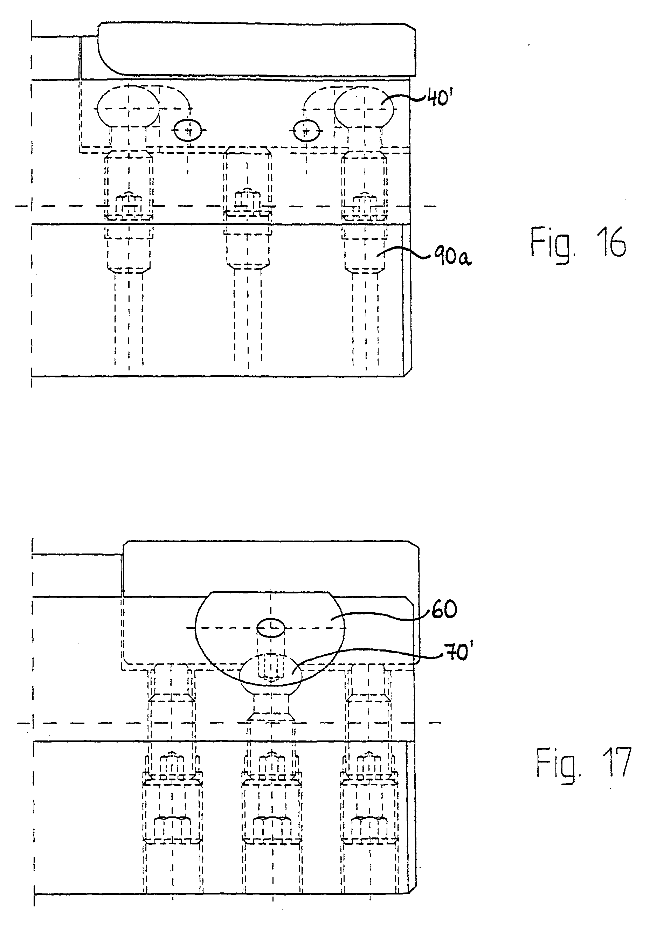

Fig. 14 bis 17 veranschaulichen die Anordnung der als Kugelglied ausgeführten Verstellglieder 40' in der Kassette 30a. Insbesondere zeigen sie eine Einführungsöffnung und eine in der Form komplementäre Ausnehmung 112a, in der die Verstellglieder 40' jeweils angeordnet werden, wie am besten aus Fig. 14 hervorgeht. Fig. 15 zeigt die lagemäßige Beziehung zwischen der Einführungsöffnung und der komplementären Ausnehmung, z.B. in Fig. 9 von rechts gesehen, und Fig. 16 zeigt die Anordnung im montierten Zustand. Fig. 17 zeigt dies entsprechend für das als Kugelglied ausgeführte Spannglied 70'.

Bei dem in Fig. 18, 18 a, 19 und 19 a veranschaulichten achten Ausführungsbeispiel und einer Variante davon sind weitere Beispiele für eine Formaussparung für das Verstell- und Spannglied gezeigt, bei denen diese eine flache Kopfform aufweisen. In beiden Fällen ist jeweils in der Kassette 30" bzw. im Klemmkeil 60" eine durchgehende Nut 112b bzw. 120 vorgesehen, die seitlich eingefräst oder ggf. einerodiert worden ist. Bei den gezeigten Ausführungen ist die Form der Nuten rinnen- oder muldenförmig. Diese Variante eignet sich insbesondere für flache Schneidplatten. Bei diesem Ausführungsbeispiel kann als Montagehilfe eine Eingriffsöffnung 70b für die Verwendung eines Montageschlüssels von der Außenseite des Werkzeugs vorgesehen sein.

Zur Kompensation unterschiedlicher Einbauhöhen bzw. zur Verhinderung unerwünschten Spiels ist vorteilhaft bei dem in Fig. 20 dargestellten neunten Ausführungsbeispiel der Erfindung eine Feder 130 vorgesehen, die von unten gegen die Kassette 30"' in formmäßiger Anlage eine Schulter 112c gegen den Kopf der Schraube 40"' drückt.

Außerdem ist in Fig. 20 eine Tellerfeder 140 gezeigt, die von unten gegen den Klemmkeil 60"' drückt. Ist der Klemmkeil 60"' mittels eines Montageschlüsseleingriffs in die Kopfausnehmung 70c der Spannschraube 70"' gelöst worden, treibt die Tellerfeder 140 den Klemmkeil 60"' nach außen.

Das in Fig. 21 veranschaulichte zehnte Ausführungsbeispiel unterscheidet sich von denen von Fig. 9 und 18 in der Querschnittsform der Nut 112d in der Kassette 30"", die hier trapezförmig ist. Varianten des zehnten Ausführungsbeispiels mit weiteren Nutenquerschnittsformen (keilförmig, rechteckförmig) sind in Fig. 21 a und Fig. 21 b gezeigt.

Fig. 22 zeigt ein elftes Ausführungsbeispiels, das sich in der Ausgestaltung des Schneidmessers von den bisher beschriebenen Ausführungsbeispielen unterscheidet. Das Schneidmesser 21 ist nicht in einer Kassette gehaltert, sondern sitzt auf einem Träger und ist selbst ein Verstellmittel. Zu diesem Zweck ist in das Schneidmesser 21 eine ellipsenförmige Ausnehmung 150a erodiert worden, in die der Kopf eines Verstellgliedes 40' (Kugelglied) eingreift. Das Verstellglied mit Abstützschraube ist für die Verstellung des Schneidmessers 21 vorgesehen. Der Klemmkeil 60"' sitzt an dem Schneidmesser 21 an und wird von einem Kugelglied 70' in einer Richtung parallel zu der Achse des Verstellglieds 40f betätigt.

Fig. 22 a zeigt eine Variante des elften Ausführungsbeispiels mit flach ellipsenförmiger Ausnehmung 150b. Weitere Varianten sind in Fig. 22 b bis Fig. 22 d gezeigt. Bei ihnen zeigt der Ausnehmungsquerschnitt Trogform, Keilform und Rechteckform.

Fig. 23 veranschaulicht ein zwölftes Ausführungsbeispiel. Bei dieser Ausführung wirken das Verstellglied 40' und das Spannformteil 70' in paralleler Richtung. Das Schneidmesser 21' ist wiederum nicht in einer Kassette, sondern lediglich auf einem nicht dargestellten Träger gehaltert. Auf der dem Spannkeil 60^{v} zugewandten Seite ist es mit einer Ausnehmung mit Absatz versehen, in die der vordere Endbereich 64" des Spannkeils 60^{v} eingreift.

Bei einer in Fig. 23 a gezeigten Variante des zwölften Ausführungsbeispiels greift ein Sondergewindestift 41 von unten am Schneidmesser 21" zu dessen Verstellung an.

Fig. 24, Fig. 24 a und Fig. 24 b zeigen anhand eines dreizehnten Ausführungsbeispiels ein Beispiel für einen Klemmeingriff zwischen Kassette und Schneidmesser. Eine dort dargestellte Kassette 30h weist eine muldenförmige Ausnehmung 30i auf, zu der ein Schneidmesser 170 komplementär geformt ist, so daß sich mit Einlegen des Schneidmessers 170 in die Kassettenaufnahme ein Formschluß ergibt. Zur Vereinfachung der Lagerung des Schneidmessers 170 ist eine Zentrierungsnut 30k am Boden der Nut 30i vorgesehen. Die Fixierung des Schneidmessers erfolgt mittels eines Klemmkeils 60"". Es ist offensichtlich, daß selbstverständlich andere Formen wie beispielsweise Rechteckform etc. für die Ausnehmung und den Schneidmesservorsprung möglich sind. Fig. 24 c veranschaulicht die Ausführung mit offener Kassette 30h.

Bei einem in Fig. 25 und Fig. 25 a bis e dargestellten vierzehnten Ausführungsbeispiel der Erfindung, das als Bohrwerkzeug ausgeführt ist, ist ebenfalls ein Schneidplattenträger 164 vorgesehen. Das Schneidmesser 180 kann gemäß Fig. 25 (a) bis (d) unterschiedliche Formen (quadratischer, versetzt rautenförmiger, hexagonaler, kreisförmiger Querschnitt) aufweisen. Gehaltert wird das Schneidmesser 180 wiederum über Formteil und verstellt mittels Differentialschraube oder Formteil 168, hier veranschaulicht mit Ellipsenkopf.

Fig. 26 und Fig. 26 a zeigen ein fünfzehntes Ausführungsbeispiel der Erfindung, das ebenfalls als Bohrwerkzeug für größere Durchmesser ausgeführt ist. Das Schneidmesser 180' hat eine größere Stärke und wird mittels Klemmkeil 60' in der Lage fixiert.

Eine in Fig. 26 b und Fig. 26 c veranschaulichte Variante dieses Ausführungsbeispiels unterscheidet sich von diesem in der Form des Schneidmessers 180", das einen kreisförmigen Querschnitt aufweist. Diese Variante ist außerdem ein Beispiel einer Ausführung für größere Durchmesser und weist vier Führungsleisten 80 auf.

Fig. 27 und Fig. 27 a zeigen ein sechzehntes Ausführungsbeispiel eines erfindungsgemäßen Bohr- und Schneidwerkzeuges, das ein Schneidmesser 180"' mit anderer Querschnittsform sowie einen Klemmkeil 60^{VI} mit anderer Form aufweist.

Fig. 28 a zeigt ein siebzehntes Ausführungsbeispiel der Erfindung mit zwei Schneiden, bei denen jeweils eine Kassette 150 aus Stahl vorgesehen ist, in deren Ausnehmung ein Schneidmesser 160' aus Hartmetall durch Löten befestigt und durch eine Differentialschraube 40 verstellbar ist. Gegenüber den bei dem vorliegenden Ausführungsbeispiel etwa im Winkel von 80 bis 100° angeordneten Schneiden ist jeweils eine Führungsleiste 80 angeordnet, wodurch das Werkzeug für die Feinbearbeitung besonders geeignet ist. Die Schneidenanordnung ist nicht auf den angegebenen Winkelbereich beschränkt. Das Vorsehen von zwei Schneiden ermöglicht eine Feinbearbeitung, wobei beispielsweise eine Schneide in bezug auf die andere axial vorsteht. Die andere Schneide für die Feinbearbeitung steht zweckmäßig in bezug auf die andere radial vor.

In Fig. 28 b ist ein achtzehntes Ausführungsbeispiel der Erfindung dargestellt, das sich von dem vorhergehenden lediglich in der Ausgestaltung der Schneidmesseranordnung unterscheidet, d.h. eine Verstellung mittels Formzwangseingriff hat.

Ein in Fig. 29 veranschaulichtes neunzehntes Ausführungsbeispiel eines erfindungsgemäßen Reib- und Schneidwerkzeuges weist in bezug auf das Werkzeug gemäß achtzehntem Ausführungsbeispiel eine dritte Führungsrippe auf der Seite gegenüberliegend den beiden anderen Führungsleisten 80 auf. Hierdurch ist ein besonders ruhiger Werkzeuglauf und damit außerordentlich hohe Oberflächengüte ermöglicht.

Das in Fig. 30 gezeigte zwanzigste Ausführungsbeispiel eines erfindungsgemäßen Reib- und Schneidwerkzeugs weist drei Führungsleisten 80 aus Cermet und drei Schneidmesser 160 aus Hartmetall auf, die auf einem Träger sitzen. Bei diesem Ausführungsbeispiel ist eine axiale Kühlmittelbohrung 20 im Grundkörper bzw. Schaft 2 vorgesehen, die in Fig. 30 b lediglich angedeutet und deren Anordnung in Fig. 37 gezeigt ist. Im hinteren Teil des Schafts 2 erstreckt sich eine axiale Bohrung 20 für Kühl- und Schmiermittel in Richtung des Schneidkopfes. Die axiale Bohrung 20 verzweigt sich in Abzweigbohrungen 22, die schräg nach außen und nach vorne verlaufen. Zur Außenseite sind die Abzweigbohrungen 22 durch Stopfen 22a verschlossen. In einem radialen Abstand von der Schaftachse, einwärts der Führungsleisten 80, gehen die Abzweigbohrungen 22 in koaxiale Zuleitbohrungen 24 über, die an ihrem stirnseitigen Ende durch nicht gezeigte Stopfen verschlossen sind. Etwa vom mittleren Bereich bis zum vorderen Bereich weisen beim gezeigten Ausführungsbeispiel die koaxialen Zuleitbohrungen 24 drei Austrittsbohrungen 26 auf, die jeweils im Spanraum 18 münden.

Durch diesen Aufbau der Kühlmittel- und Schmiermittelzuleitungen wird erreicht, daß der Schaft 2 selbst im Schneidbereich durch die koaxialen Zuleitbohrungen 24 gekühlt wird. Die koaxiale Anordnung der Zuleitbohrungen 24 ermöglicht es, die Lage der Austrittsbohrungen 26 nach den Beanspruchungen des Werkzeugs zu legen und deren Zahl bedarfsweise zu wählen, so daß die Schneiden durch direktes Anspülen wirksam gekühlt werden können, und zwar über einen gewünschten axialen Bereich. Des weiteren kann die Spanausspülung und Reinigung des Spanraums auf diese Weise auch entsprechend dem Werkstückmaterial optimiert werden.

In Fig. 31 ist ein einundzwanzigstes Ausführungsbeispiel der Erfindung veranschaulicht, das zusätzlich zu den Merkmalen des neunzehnten Ausführungsbeispiels axial zu den Schneiden versetzt zusätzliche Führungsleisten 82 aufweist.

Fig. 32 zeigt ein zweiundzwanzigstes Ausführungsbeispiel eines erfindungsgemäßen Reib- und Senk-Schneidwerkzeugs. Dieses unterscheidet sich von dem neunzehnten Ausführungsbeispiel im wesentlichen in der Ausgestaltung der Schneidmesseranordnung. Anstelle eines mit dem Verstellmittel direkt in Eingriff stehenden Schneidmessers 160 ist eine den Schneidmesserträger bildende Kassette 150 aus Stahl vorgesehen, in deren Ausnehmung ein Schneidmesser 160' aus Hartmetall durch Löten befestigt ist. Eine Differentialschraube 40' steht mit zwei offenen Gewindeabschnitten der Kassette 150 in Eingriff und verstellt über diese das Schneidmesser 160'. Weiter sind für die Führungsrippen 80 innere Zuleitbohrungen 24 und Austrittsbohrungen 26 zur verbesserten Kühlung und Schmierung vorgesehen.

In Fig. 33 ist ein dreiundzwanzigstes Ausführungsbeispiel der Erfindung veranschaulicht, das zusätzlich zu den Merkmalen des achtzehnten Ausführungsbeispiels axial zu den Schneiden versetzt zusätzliche Führungsleisten 82 aufweist.

Ein in Fig. 34 dargestelltes Reib- und Senk-Schneidwerkzeug mit zwei verstellbaren Schneiden ist ähnlich dem in Fig. 32 gezeigten Ausführungsbeispiel aufgebaut. Es umfaßt zwei in Kassetten 150 befestigte Schneidmesser 160' und zwischen diesen jeweils zwei Führungsleisten 80. Die Klemmbefestigung mit Spannkeil 60 ist gleich ausgeführt. Es sind zwei koaxiale Zuleitungen 24 für Kühlmittel vorgesehen, die diametral angeordnet sind. Ihre Austrittsöffnungen münden in den Spanraum 18.

Bei dem in Fig. 35 gezeigten fünfundzwanzigsten Ausführungsbeispiel sind zusätzlich zu den Merkmalen des vorhergehend beschriebenen einundzwanzigsten Ausführungsbeispiels Freimachungen 28 im Grundkörper bzw. Schaft 2 vorgesehen, in die drei Kühlmittelaustrittsbohrungen 26 münden.

Das in Fig. 36 gezeigte schsundzwanzigste Ausführungsbeispiel unterscheidet sich von dem vorhergehenden Ausführungsbeispiel in zusätzlich vorgesehenen Führungsleisten 82, die fluchtend mit den Schneidmessern 160' angeordnet sind.

## Patentansprüche

1. Reib- und Senk-Schneidwerkzeug mit einem Grundkörper (2), an dem ein Schneidmesser (20) durch ein Spannglied (70) auswechselbar klemmbefestigt ist und durch ein Verstellglied (40) über ein Verstellmittel (30) in seiner radialen Position einstellbar ist, wobei das Verstellmittel (30) ein sich in eine Ausnehmung des Grundkörpers erstreckender Schneidmesserträger ist und wobei das Verstellglied (40) zwei Differentialschrauben umfaßt, die mit dem Verstellmittel (30) in Gewindeeingriff stehen.

2. Reib- und Senk-Schneidwerkzeug mit einem Grundkörper, an dem ein Schneidmesser (20) durch ein Spannglied (70) auswechselbar klemmbefestigt ist und durch ein Versteliglied (40) über ein Verstellmittel (30) in seiner radialen Position einstellbar ist, wobei das Verstellmittel (30) ein sich in eine Ausnehmung des Grundkörpers (2) erstreckender Schneidmesserträger ist und wobei das Verstellglied (40, 168) zwei Kugel- oder Klemmglieder umfaßt, die mit einer komplementären Ausnehmung des Verstellmittels in Formzwangseingriff stehen derart, daß eine Bewegung des Verstellglieds eine Bewegung des Schneidmessers in derselben Richtung herbeiführt, wobei der Schneidmesserträger einwärts und auswärts verstellbar ist.

3. Werkzeug nach Anspruch 1 oder 2, **dadurch gekennzeichnet, daß** für die Klemmbefestigung des Schneidmesserträgers (30) ein Spannkeil (60) oder -winkelstück oder eine Pratze (160) vorgesehen ist, der auf der Schneidmesserseite des Schneidmesserträgers (30) durch das Spannglied (70) befestigt ist.

4. Werkzeug nach einem der Ansprüche 1 bis 3, dadurch g e**kennzeichnet,** daß das Spannglied eine Spannschraube, insbesondere eine Differentialschraube, ist.

5. Werkzeug nach einem der Ansprüche 1, 3 und 4, **dadurch gekennzeichnet, daß** das Verstellglied mit halbem Gewinde versehen ist.

6. Werkzeug nach einem der Ansprüche 1, 3 bis 5, **dadurch gekennzeichnet, daß** das Verstellglied unterschiedliche Gewindesteigungen in den beiden gegenläufigen Gewinden aufweist.

7. Werkzeug nach einem der Ansprüche 1 bis 6, **dadurch gekennzeichnet, daß** der Schneidmesserträger (30) eine sich in Längsrichtung des Schneidmessers (20) erstreckende Kassette in Blockform mit Ausnehmung für das Schneidmesser (20) ist.

8. Werkzeug nach Anspruch 7, **dadurch gekennzeichnet, daß** die Kassette (30) offen mit Gewindeabschnitten (34) /komplementärer Ausnehmung für einen Eingriff mit dem Verstellglied (46) auf ihrer dem Schneidmesser abgewandten Seite ausgebildet ist.

9. Werkzeug nach Anspruch 7, **dadurch gekennzeichnet, daß** die Kassette geschlossen mit im Kassettenkörper vorgesehenem Gewinde/komplementärer Ausnehmung für einen Eingriff mit dem Verstellglied ausgebildet ist.

10. Werkzeug nach einem der Ansprüche 1 bis 7 und 9, **dadurch gekennzeichnet, daß** die Kassette (30) mit Bohrungen (90a, 92, 110) für Stützschrauben versehen ist.

11. Werkzeug nach einem der Ansprüche 1 bis 7 oder 10 und 9, **dadurch gekennzeichnet, daß** der Grundkörper (2) eine Bohrung (100a) für eine Stützschraube zur Sicherung des Klemmkeils (60) aufweist.

12. Werkzeug nach einem der Ansprüche 1 bis 7 oder 10, 11, **dadurch gekennzeichnet, daß** in der Kassette (30") und/oder im Klemmkeil (60") eine Nut (120, 112b) als komplementäre Ausnehmung für das Verstell- und/oder Spannglied vorgesehen ist.

13. Werkzeug nach einem der Ansprüche 1 bis 7 oder 10 bis 12, **dadurch gekennzeichnet, daß** ein in radialer Richtung wirkende Spielausgleichsfeder (130) für die Kassette (30" ') vorgesehen ist.

14. Werkzeug nach einem der Ansprüche 1 bis 13, **dadurch gekennzeichnet, daß** der Klemmkeil (60"') durch eine Feder (140) radial nach außen vorgespannt ist.

15. Werkzeug nach einem der Ansprüche 7 bis 14, **dadurch gekennzeichnet, daß** ein sich in radialer Richtung erstreckender, im Grundkörper befestigter Sicherungsstift mit dem in bezug auf die Werkzeugspitze hinteren Ende der Kassette in Eingriff steht.

16. Werkzeug nach einem der Ansprüche 7 bis 15, **dadurch gekennzeichnet, daß** im Grundkörper eine Ausnehmung für einen Eingriff mit dem in bezug auf die Werkzeugspitze hinteren Ende der Kassette mit einer Form vorgesehen ist, die in ihrer Kontur der Form des Kassettenendes entspricht.

17. Werkzeug nach einem der Ansprüche 1 bis 16, **dadurch gekennzeichnet, daß** der Schneidmesserträger eine Platte ist.

18. Werkzeug nach einem der Ansprüche 1 bis 17, **dadurch gekennzeichnet, daß** eine Aufnahme (30i) für eine formschlüssige Lagerung des Schneidmessers (20h) und eine Klemmbefestigung mittels Spannkeil (60"") vorgesehen sind.

19. Werkzeug nach einem der Ansprüche 1 bis 17, **dadurch gekennzeichnet, daß** das Schneidmesser mit dem Schneidmesserträger verlötet ist.

20. Werkzeug nach einem der Ansprüche 1 bis 18 zur Verwendung als Feinbohrwerkzeug , **dadurch gekennzeichnet, daß** das Schneidmesser im Schneidmesserträger formschlüssig gelagert ist.

21. Werkzeug nach einem der Ansprüche 1 bis 20, **dadurch gekennzeichnet, daß** mindestens eine Führungsleiste (80) vorgesehen ist.

22. Werkzeug nach einem der Ansprüche 1 bis 21, **dadurch gekennzeichnet, daß** zwei Führungsleisten (80) vorgesehen sind und in einem Umfangswinkelabstand von 120° zueinander und zum Schneidmesser angeordnet sind.

23. Werkzeug nach einem der Ansprüche 1 bis 22, **dadurch gekennzeichnet, daß** zwei Führungsleisten (80) vorgesehen sind, von denen eine gegenüber dem Schneidmesser (20) angeordnet ist.

24. Werkzeug nach einem der Ansprüche 1 bis 23, **dadurch gekennzeichnet, daß** mindestens ein weiteres Schneidmesser in Stufenanordnung zum ersten Schneidmesser in axialem Abstand angeordnet ist.

25. Werkzeug nach einem der Ansprüche 1 bis 24, **dadurch gekennzeichnet, daß** zwei oder mehrere Schneidmesser entlang des Umfangs angeordnet sind.

26. Werkzeug nach Anspruch 25, **dadurch gekennzeichnet, daß** zwei Schneidmesser (I, II) diametral angeordnet sind.

27. Werkzeug nach einem der Ansprüche 1 bis 26, **dadurch gekennzeichnet, daß** das Schneidmesser aus Hartmetall, Cermet, Keramik, polykristallinem, Natur- und synthetischem Diamant als Dünn- und Dickfilm besteht.

28. Werkzeug nach einem der Ansprüche 1 bis 27, dadurch **ge** **kennzeichnet,** daß die Schneidplatte aus Stahl oder Hartmetall ist.

29. Werkzeug nach einem der Ansprüche 1 bis 28, **dadurch gekennzeichnet, daß** die Führungsleisten aus Hartmetall, Cermet, Keramik, polykristallinem, Natur- und synthetischen Diamant bestehen.

30. Werkzeug nach einem der Ansprüche 1 bis 29, **dadurch gekennzeichnet, daß** eine Kühlmittelzufuhr zum Schneidmesser vorgesehen ist.

31. Werkzeug nach Anspruch 30, **dadurch gekennzeichnet, daß**
eine zentrale axiale Kühlmittelbohrung (20) im Werkzeugschaft und mindestens eine zum Schneidbereich führende Bohrung (22, 24, 26) für Kühl- und/oder Schmiermittel vorgesehen sind und
von der axialen Kühlmittelbohrung (20) in deren vorderem Bereich mindestens eine Abzweigbohrung (22) nach außen führt.

32. Werkzeug nach Anspruch 31, **dadurch gekennzeichnet, daß**
die Abzweigbohrung (22) in eine koaxiale Zuleitbohrung (24) mündet, die sich axial mindestens teilweise über den Schneidbereich erstreckt, und
von der koaxialen Zuleitbohrung (24) mindestens eine Austrittsbohrung (26) zum Schneidbereich führt.

33. Werkzeug nach Anspruch 30 und einem der Ansprüche 21 bis 23, 29, 31 oder 32, **dadurch gekennzeichnet, daß** der Führungsleiste (80) mindestens eine Austrittsbohrung (26) zugeordnet ist.

34. Werkzeug nach Anspruch 33, **dadurch gekennzeichnet, daß** die der Führungsleiste (80) zugeordnete Austrittsbohrung (26) in Drehrichtung vor der Führungsleiste nach außen führt.

35. Werkzeug nach Anspruch 33 oder 34, **dadurch gekennzeichnet, daß** mindestens eine Austrittsbohrung (26) durch die Führungsleiste (80) nach außen verläuft.

36. Werkzeug nach einem der Ansprüche 30 bis 35, **dadurch gekennzeichnet, daß** sich die koaxiale Zuleitbohrung (24) über die gesamte Länge des Schneidbereichs erstreckt.

37. Werkzeug nach einem der Ansprüche 30 bis 36, **dadurch gekennzeichnet, daß** axial versetzt mehrere Austrittsbohrungen (26) vorgesehen sind.

38. Werkzeug nach einem der Ansprüche 30 bis 37, **dadurch gekennzeichnet, daß** im Außenumfang des Grundkörpers (2) mindestens eine Freimachung (28) vorgesehen ist, in die mindestens eine Austrittsbohrung (26) mündet.

39. Werkzeug nach einem der Ansprüche 30 bis 38, **dadurch gekennzeichnet, daß** die Austrittsbohrung (26) in den Spanraum einer zugeordneten Schneide (160) mündet.

40. Werkzeug nach einem der Ansprüche 30 bis 39, **dadurch gekennzeichnet, daß** die Abzweigbohrung (24) schräg nach vorne gerichtet ist.

41. Werkzeug nach einem der Ansprüche 30 bis 40 mit mindestens einer Führungsleiste (80), **dadurch gekennzeichnet, daß** die der Führungsleiste (80) zugeordnete Abzweig- und/oder Austrittsbohrung (22, 26) einen kleineren Durchmesser als die der Schneide (160) zugeordnete Bohrung aufweist.

42. Verwendung des Werkzeuges nach einem der Ansprüche 1 bis 19, 21 bis 41 als Reibahle.

## Claims

1. Friction and countersink cutting tool with a basic body (2), to which a cutting blade (20) is clamped in a replaceable manner by means of a tensioning element (70) and is adjustable in its radial position by means of an adjustment element (40) by way of adjustment means (30), whereby the adjustment means (30) is a cutting blade carrier extendible into a cut-out of the basic body, and whereby the adjustment element (40) comprises two differential screws which are in thread engagement with the adjustment means (30).

2. Friction and countersink cutting tool with a basic body, to which a cutting blade (20) is clamped in a replaceable manner by means of a tensioning element (70) and is adjustable in its radial position by means of an adjustment element (40) by way of adjustment means (30), whereby the adjustment means (30) is a cutting blade carrier extendible into a cut-out of the basic body, and whereby the adjustment element (40, 168) comprises two spherical or clamping elements, which are located in a complementary cut-out of the adjustment means in positive constrained fit in such a way that a movement of the adjustment element induces a movement of the cutting blade in the same direction, whereby the cutting blade carrier is adjustable inwards and outwards.

3. Tool according to Claim 1 or 2, **characterised in that** the clamp securing of the cutting blade carrier (30) is effected by a tensioning wedge element (60) or tensioning angle piece or a claw element (160), which is secured on the cutting blade side of the cutting blade carrier (30) by the cutting element (70).

4. Tool according to one of Claims 1 to 3, **characterised in that** the tensioning element is a tensioning screw, in particular a differential screw.

5. Tool according to one of Claims 1, 3 and 4 **characterised in that** the adjustment element is provided with a half-thread.

6. Tool according to one of Claims 1, 3 to 5, **characterised in that** the adjustment element features differing thread pitches in the two counter-threads.

7. Tool according to one of Claims 1 to 6, **characterised in that** the cutting blade carrier (30) is a cassette in block form extending in the longitudinal direction of the cutting blade (20), with a cut-out for the cutting blade (20).

8. Tool according to Claim 7, **characterised in that** the cassette (30) is formed open with thread sections (34)/complementary cut-out for engagement with the adjustment element (46), on its side turned away from the cutting blade.

9. Tool according to Claim 7, **characterised in that** the cassette is formed closed, with a thread/complementary cut-out provided in the cassette body for engagement with the adjustment element.

10. Tool according to one of Claims 1 to 7 and 9, **characterised in that** the cassette (30) is provided with drill holes (90a, 92, 110) for support screws.

11. Tool according to one of Claims 1 to 7 or 10 and 9, **characterised in that** the basic body (2) features a drillhole (100a) for a support screw to secure the clamping wedge element (60).

12. Tool according to one of Claims 1 to 7 or 10, 11, **characterised in that** a groove (120, 112b) is provided in the cassette (30") and/or in the clamping wedge (60") as a complementary cut-out for the adjustment element and/or clamping element.

13. Tool according to one of Claims 1 to 7 or 10 to 12, **characterised in that** a play compensation spring (130) taking effect in the radial direction is provided for the cassette (30"').

14. Tool according to one of Claims 1 to 13, **characterised in that** the clamping wedge (60"') is pre-tensioned radially outwards by means of a spring (140).

15. Tool according to one of Claims 7 to 14, **characterised in that** a securing pin extending in the radial direction and secured in the basic body is in engagement with the rear end of the cassette in relation to the tool tip.

16. Tool according to one of Claims 7 to 15, **characterised in that** a cut-out is provided in the basic body for an engagement with the rear end of the cassette, in relation to the tool tip, with a shape which corresponds in its contour to the shape of the cassette end.

17. Tool according to one of Claims 1 to 16, **characterised in that** the cutting blade carrier is a plate.

18. Tool according to one of Claims 1 to 17, **characterised in that** a cut-out (30i) is provided for the positive-fit mounting of the cutting blade (20h) and a clamp securing arrangement is provided by means of a clamping wedge (60" ").

19. Tool according to one of Claims 1 to 17, **characterised in that** the cutting blade is soldered to the cutting blade carrier.

20. Tool according to one of Claims 1 to 16 for use as a fine drill, **characterised in that** the cutting blade is mounted in positive fit in the cutting blade carrier.

21. Tool according to one of Claims 1 to 20, **characterised in that** at least one guide strip (80) is provided for.

22. Tool according to one of Claims 1 to 21, **characterised in that** two guide strips (80) are provided, and are arranged at a circumferential angle interval of 120° to one another and to the cutting blade.

23. Tool according to one of Claims 1 to 22, **characterised in that** two guide strips (80) are provided, one of which is arranged opposite the cutting blade (20).

24. Tool according to one of Claims 1 to 23, **characterised in that** at least one further cutting blade is arranged in step arrangement to the first cutting blade at an axial interval.

25. Tool according to one of Claims 1 to 24, **characterised in that** two or more cutting blades are arranged along the circumference.

26. Tool according to Claim 25, **characterised in that** two cutting blades (I, II) are arranged diametrically.

27. Tool according to one of Claims 1 to 26, **characterised in that** the cutting blade consists of carbide or hard metal, Cermet, ceramics, polycrystalline, natural, and synthetic diamond as thin and thick film.

28. Tool according to one of Claims 1 to 27, **characterised in that** the cutting plate is made of steel or carbide metal.

29. Tool according to one of Claims 1 to 28, **characterised in that** the guide strips consist of carbide or hard metal, Cermet, ceramics, polycrystalline, natural, and synthetic diamond.

30. Tool according to one of Claims 1 to 29, **characterised in that** a coolant medium feed is provided to the cutting blade.

31. Tool according to Claim 30, **characterised in that** a central axial coolant medium drillhole (20) is provided in the tool shaft and at least one drillhole (22, 24, 26) leading to the cutting area, for coolant and/or lubricating media, and at least one branch drillhole (22) leads to the outside from the axial coolant medium drill hole (20) in the front part thereof.

32. Tool according to Claim 31, **characterised in that** the branch drillhole (22) opens into a coaxial feed drillhole (24), which extends axially at least in part over the cutting area, and at least one outlet drillhole (26) leads from the coaxial feed drillhole (24) to the cutting area.

33. Tool according to Claim 30 and one of Claims 21 to 23, 29, 31 or 32, **characterised in that** at least one outlet drillhole (26) is allocated to the guide strip (80).

34. Tool according to Claim 33, **characterised in that** the outlet drillhole (26) allocated to the guide strip (80) leads to the outside in the rotational direction in front of the guide strip.

35. Tool according to Claim 33 or 34, **characterised in that** at least one outlet drillhole (26) runs to the outside through the guide strip (80).

36. Tool according to one of Claims 30 to 35, **characterised in that** the coaxial feed drillhole (24) extends over the entire length of the cutting area.

37. Tool according to one of Claims 30 to 36, **characterised in that** several outlet drillholes (26) are provided axially offset.

38. Tool according to one of Claims 30 to 37, **characterised in that** at least one opening (28) is provided in the outer circumference of the basic body (2), into which at least one outlet drillhole (26) opens.

39. Tool according to one of Claims 30 to 38, **characterised in that** the outlet drillhole (26) opens into the chip chamber of a cutting blade (160) allocated to it.

40. Tool according to one of Claims 30 to 39, **characterised in that** the branch drillhole (24) is directed obliquely forwards.

41. Tool according to one of Claims 30 to 40 with at least one guide strip, **characterised in that** the branch drillhole and/or outlet drillhole (22, 26) allocated to the guide strip (80) features a smaller diameter than the drillhole allocated to the cutting blade (160).

42. Use of the tool according to one of Claims 1 to 19, 21 to 41, as a reamer.

## Revendications

1. Outil de coupe pour alésage et lamage comprenant un corps de base (2) sur lequel une lame de coupe (20) est fixée par blocage de façon échangeable à l'aide d'un organe de serrage (70) et est réglable en position radiale par un organe de réglage (40) en passant par un moyen de réglage (30), le moyen de réglage (30) étant un porte-lame s'étendant dans un évidement du corps de base et l'organe de réglage (40) comprenant deux vis différentielles qui se trouvent en prise de filetage avec le moyen de réglage (30).

2. Outil de coupe pour alésage et lamage comprenant un corps de base sur lequel une lame de coupe (20) est fixée par blocage de façon échangeable à l'aide d'un organe de serrage (70) et est réglable en position radiale par un organe de réglage (40) en passant par un moyen de réglage (30), le moyen de réglage (30) étant un porte-lame s'étendant dans un évidement du corps de base (2) et l'organe de réglage (40, 168) comprenant deux organes à boule ou de blocage qui se trouvent en prise par complémentarité de forme avec un évidement de forme complémentaire du moyen de réglage de telle manière qu'un mouvement de l'organe de réglage entraîne un mouvement de la lame dans la même direction, le porte-lame étant ainsi réglable vers l'intérieur et vers l'extérieur.

3. Outil selon la revendication 1 ou 2, **caractérisé par le fait qu'**il comprend, pour la fixation par blocage du porte-lame (30), un coin (60) ou une équerre de serrage ou une bride (160), fixé par l'organe de serrage (70) sur le le porte-lame (30) du côté lame.

4. Outil selon l'une des revendications 1 à 3, **caractérisé par le fait que** l'organe de serrage est une vis de serrage, en particulier une vis différentielle.

5. Outil selon l'une des revendications 1, 3 et 4, **caractérisé par le fait que** l'organe de réglage comporte un demi-filet.

6. Outil selon l'une des revendications 1, 3 à 5, **caractérisé par le fait que** les deux filets de sens contraires de l'organe de réglage ont des pas différents.

7. Outil selon l'une des revendications 1 à 6, **caractérisé par le fait que** le porte-lame (30) est une cassette en forme de bloc s'étendant dans la direction longitudinale de la lame de coupe (20) et présentant un évidement pour la lame de coupe (20).

8. Outil selon la revendication 7, **caractérisé par le fait que** la cassette (30), sur le côté éloigné de la lame de coupe, est réalisée ouverte avec des tronçons de filet (34) /un évidement complémentaire pour une prise avec l'organe de réglage (46).

9. Outil selon la revendication 7, **caractérisé par le fait que** la cassette est réalisée fermée avec un filet/évidement complémentaire dans le corps de cassette pour une prise avec l'organe de réglage.

10. Outil selon l'une des revendications 1 à 7 et 9, **caractérisé par le fait que** la cassette (30) comporte des trous (90a, 92, 110) pour des vis d'appui.

11. Outil selon l'une des revendications 1 à 7 ou 10 et 9, **caractérisé par le fait que** le corps de base (2) présente un trou (100a) pour une vis d'appui pour le maintien du coin de blocage (60).

12. Outil selon l'une des revendications 1 à 7 ou 10, 11, **caractérisé par le fait qu'**une rainure (120, 112b) est prévue dans la cassette (30") et/ou dans le coin de blocage (60") en tant qu'évidement complémentaire pour l'organe de réglage et/ou de serrage.

13. Outil selon l'une des revendications 1 à 7 ou 10 à 12, **caractérisé par le fait qu'**il est prévu pour la cassette (30"') un ressort de compensation de jeu (130) agissant en direction radiale.

14. Outil selon l'une des revendications 1 à 13, **caractérisé par le fait que** le coin de blocage (60''') est précontraint radialement vers l'extérieur par un ressort (140).

15. Outil selon l'une des revendications 7 à 14, **caractérisé par le fait qu'**une goupille de sécurité fixée dans le corps de base en s'étendant en direction radiale est en prise avec l'extrémité de la cassette situé à l'arrière par rapport à la pointe de l'outil.

16. Outil selon l'une des revendications 7 à 15, **caractérisé par le fait que** le corps de base présente, en vue d'une prise avec l'extrémité de la cassette située à l'arrière par rapport à la pointe de l'outil, un évidement ayant une forme dont le contour correspond à la forme de l'extrémité de la cassette.

17. Outil selon l'une des revendications 1 à 16, **caractérisé par le fait que** le porte-lame est une plaque.

18. Outil selon l'une des revendications 1 à 17, **caractérisé par le fait qu'**il est prévu un logement (30i) pour une réception par complémentarité de forme de la lame de coupe (20h) et une fixation par blocage par coin de serrage (60"").

19. Outil selon l'une des revendications 1 à 17, **caractérisé par le fait que** la lame de coupe est fixée par brasage au porte-lame.

20. Outil selon l'une des revendications 1 à 18 pour utilisation en tant qu'outil d'alésage de précision, **caractérisé par le fait que** la lame de coupe est montée par complémentarité de forme dans le porte-lame.

21. Outil selon l'une des revendications 1 à 20, **caractérisé par le fait qu'**il comprend au moins un listel de guidage (80).

22. Outil selon l'une des revendications 1 à 21, **caractérisé par le fait qu'**il comprend deux listels de guidage (80) disposés avec un décalage angulaire circonférentiel de 120° l'un par rapport à l'autre et par rapport à la lame de coupe.

23. Outil selon l'une des revendications 1 à 22, **caractérisé par le fait qu'**il comprend deux listels de guidage (80) dont l'un est disposé à l'opposé de la lame de coupe (20).

24. Outil selon l'une des revendications 1 à 23, **caractérisé par le fait qu'**au moins une lame de coupe supplémentaire est disposée de façon étagée à distance axiale par rapport à la première lame de coupe.

25. Outil selon l'une des revendications 1 à 24, **caractérisé par le fait que** deux ou plus de deux lames de coupe sont disposées sur la circonférence.

26. Outil selon la revendication 25, **caractérisé par le fait que** deux lames de coupe (I, II) sont disposées de façon diamétrale.

27. Outil selon l'une des revendications 1 à 26, **caractérisé par le fait que** la lame de coupe est constituée de métal dur (carbure), cermet, céramique, diamant polycristallin naturel et synthétique en couche mince et épaisse.

28. Outil selon l'une des revendications 1 à 27, **caractérisé par le fait que** la larme de coupe est en acier ou métal dur ( carbure).

29. Outil selon l'une des revendications 1 à 28, **caractérisé par le fait que** les listels de guidage sont constitués de métal dur (carbure), cermet, céramique, diamant polycristallin naturel et synthétique.

30. Outil selon l'une des revendications 1 à 29, **caractérisé par le fait qu'**il comprend une arrivée de fluide de refroidissement à la lame de coupe.

31. Outil selon la revendication 30, **caractérisé par le fait qu'**il est prévu un canal (20) central axial de fluide de refroidissement dans la queue d'outil et au moins un canal (22, 24, 26) pour du fluide de refroidissement et/du lubrifiant, menant dans la zone de coupe, et qu'au moins un canal de dérivation (22) mène du canal (20) axial de fluide de refroidissement, dans la zone avant de ce dernier, vers l'extérieur.

32. Outil selon la revendication 31, **caractérisé par le fait que** le canal de dérivation (22) débouche dans un canal de distribution (24) coaxial qui s'étend axialement au moins sur une partie de la zone de coupe et qu'au moins un canal de sortie (26) mène du canal de distribution (24) coaxial vers la zone de coupe.

33. Outil selon la revendication 30 et selon l'une des revendications 21 à 23, 29, 31 ou 32, **caractérisé par le fait qu'**au moins un canal de sortie (26) est associé au listel de guidage (80).

34. Outil selon la revendication 33, **caractérisé par le fait que** le canal de sortie (26) associé au listel de guidage (80) mène vers l'extérieur dans une position située en avant du listel de guidage dans le sens de rotation.

35. Outil selon la revendication 33 ou 34, **caractérisé par le fait qu'**au moins un canal de sortie (26) mène à travers le listel de guidage (80) vers l'extérieur.

36. Outil selon l'une des revendications 30 à 35, **caractérisé par le fait que** le canal de distribution (24) coaxial s'étend sur toute la longueur de la zone de coupe.

37. Outil selon l'une des revendications 30 à 36, **caractérisé par le fait qu'**il comprend plusieurs canaux de sortie (26) décalés axialement.

38. Outil selon l'une des revendications 30 à 37, **caractérisé par le fait qu'**au moins un dégagement (28) dans lequel débouche au moins un canal de sortie (26) est prévu sur la circonférence extérieure du corps de base (2).

39. Outil selon l'une des revendications 30 à 38, **caractérisé par le fait que** le canal de sortie (26) débouche dans l'espace à copeaux d'une lame de coupe (160) associée.

40. Outil selon l'une des revendications 30 à 39, **caractérisé par le fait que** le canal de distribution (24) est dirigé de façon oblique vers l'avant.

41. Outil selon l'une des revendications 30 à 40 comportant au moins un listel de guidage (80), **caractérisé par le fait que** le canal de dérivation et/ou de sortie (22, 26) associé au listel de guidage (80) présente un diamètre plus faible que le canal associé à la lame de coupe (160).

42. Utilisation de l'outil selon l'une des revendications 1 à 19, 21 à 41 en tant qu'alésoir.
